# EUROPEAN PATENT APPLICATION

(11) **EP 4 801 097 A1**
(43) Date of publication of application: **02.09.2026**
(21) Application number: 24881405.5
(22) Date of filing: 09.10.2024
(51) Int. Cl.: H04W 24/08

(54) **MEASUREMENT REPORTING METHOD AND APPARATUS, TERMINAL, AND NETWORK DEVICE**

(30) Priority: 24.10.2023 CN 202311385129
(71) Applicant: Datang Mobile Communications Equipment Co., Ltd., Beijing 100085 (CN)
(72) Inventor: SONG, Lei, Beijing 100085 (CN); GAO, Qiubin, Beijing 100085 (CN); HUANG, Qiuping, Beijing 100085 (CN); LI, Hui, Beijing 100085 (CN); LUO, Yajuan, Beijing 100085 (CN); YE, Lingyun, Beijing 100085 (CN)
(74) Representative: Studio Torta S.p.A.
(86) International application number: PCT/CN2024/123602
(87) International publication number: WO 2025/087039

(57) **Abstract**

The present disclosure relates to the technical field of communications, and provides a measurement reporting method and apparatus, UE and network device. The method includes: determining, by the UE, a reporting quantity according to multiple pieces of measurement resource related information; reporting the reporting quantity to a network device, or reporting the reporting quantity and indication information of multiple pieces of measurement resource related information corresponding to the reporting quantity to the network device; where the reporting quantity includes at least one of the following: time domain related parameter, frequency domain related parameter, or phase related parameter.

## Description

The present application is filed based on and claims the priority of Chinese Application No. 202311385129.4 filed on October 24, 2023, entitled "measurement reporting method and apparatus, UE and network device", the disclosure of which are incorporated in their entireties by reference herein.

### TECHNICAL FIELD

The present disclosure relates to the field of communication technology, and in particular to a measurement reporting method and apparatus, UE and network device.

### BACKGROUND

In the related technology, coherent joint transmission (CJT) under ideal factors is standardized, and the so-called ideal factors refer to time synchronization, frequency synchronization, no time division duplex (TDD) uplink and downlink reciprocity error, no backhaul interaction delay, etc. among multiple transmission reception points (TRP). However, in actual systems, the above factors are not always ideal, that is, there may be asynchrony in time, frequency, phase, and other aspects between multiple TRPs. These non-ideal factors can significantly degrade performance of coherent transmission.

### SUMMARY

An object of the present disclosure is to provide a measurement reporting method and apparatus, UE and network device, which can solve the problem of poor transmission performance of CJT.

One embodiment of the present disclosure provides a measurement reporting method, includes:
determining, by a user equipment (UE), a reporting quantity according to multiple pieces of measurement resource related information;
reporting the reporting quantity to a network device, or reporting the reporting quantity and indication information of the multiple pieces of measurement resource related information corresponding to the reporting quantity to the network device;
wherein the reporting quantity includes at least one of the following:
   time domain related parameter;
   frequency domain related parameter; or
   phase related parameter.

Optionally, the method further includes:
determining, by the UE, a configuration parameter corresponding to the measurement resource related information;
receiving the measurement resource related information according to the configuration parameter;
wherein the measurement resource related information includes at least one of the following: measurement resource, port of measurement resource, or measurement resource set.

Optionally, the determining, by the UE, a configuration parameter corresponding to the measurement resource related information, includes:
determining configuration parameter corresponding to the measurement resource related information according to a first rule;
   or,
determining configuration parameter corresponding to measurement resource related information according to configuration information of the network device;
wherein the configuration parameter includes transmission configuration indication (TCI) state and/or quasi co-location (QCL) parameter.

Optionally, the first rule includes at least one of the following:
one measurement resource related information corresponds to one configuration parameter;
one measurement resource related information group corresponds to one configuration parameter; or
a measurement resource related information group corresponding to a code division multiplexing (CDM) group corresponds to one configuration parameter.

Optionally, the receiving the measurement resource related information according to the configuration parameter, includes at least one of the following:
determining, by the UE, a reference configuration parameter in the configuration parameter, and receiving a measurement resource by using the reference configuration parameter;
determining, by the UE, a first configuration parameter according to the configuration parameter and a reporting quantity configured by the network device, and receiving a measurement resource by using the first configuration parameter; or,
receiving, by the UE, a measurement resource based on a configuration parameter type included in the configuration parameter.

Optionally, the determining, by the UE, a reference configuration parameter in the configuration parameter, includes at least one of the following:
determining, by the UE, the reference configuration parameter according to a predefined rule;
determining, by the UE, the reference configuration parameter according to an indication of the network device; or
determining, by the UE, that an N-th configuration parameter in the configuration parameter is the reference configuration parameter, wherein N is greater than or equal to 1.

Optionally, the determining, by the UE, a first configuration parameter according to the configuration parameter and a reporting quantity configured by the network device, includes at least one of the following:
in case that the reporting quantity configured by the network device is a first reporting type, determining, by the UE, that the first configuration parameter is a reference configuration parameter in the configuration parameter; or
in case that the reporting quantity configured by the network device is not the first reporting type, determining, by the UE, that the first configuration parameter is all configuration parameters configured by the network device.

Optionally, the receiving, by the UE, a measurement resource based on a configuration parameter type included in the configuration parameter, includes:
in case that the configuration parameter includes a spatial parameter, using, by the UE, different spatial parameters for each measurement resource related information to receive the measurement resource; or,
in case that the configuration parameter includes a time domain parameter or frequency domain parameter, using, by the UE, the same time domain parameter or the same frequency domain parameter for each measurement resource related information to receive the measurement resource; or,
for one measurement resource, receiving, by the UE, the measurement resource according to a configuration parameter type configured by the network device; wherein the network device configures at most one time domain parameter or at most one frequency domain parameter e, and/or configures one or more spatial domain parameters for one measurement resource.

Optionally, the determining, by a user equipment (UE), a reporting quantity according to multiple pieces of measurement resource related information, includes at least one of the following:
determining, by the UE, the reporting quantity according to a configuration order or an indication order of multiple pieces of measurement resource related information; or
determining, by the UE, the reporting quantity according to indexes or identifiers of multiple pieces of measurement resource related information.

Optionally, the determining, by a user equipment (UE), a reporting quantity according to multiple pieces of measurement resource related information, includes at least one of the following:
determining, by the UE, a reporting quantity according to at least two measurement resources of a measurement resource set; wherein the measurement resource set includes multiple measurement resources;
determining, by the UE, one or more reporting quantities according to multiple ports corresponding to one measurement resource; or
determining, by the UE, a reporting quantity according to at least two measurement resources of multiple measurement resource sets.

Optionally, the determining, by the UE, the reporting quantity according to a configuration order or an indication order of multiple pieces of measurement resource related information, includes at least one of the following:
determining, by the UE, an n-th reporting quantity according to n-th measurement resource related information and reference measurement resource information, wherein the reference measurement resource information is one of the measurement resource related information;
determining, by the UE, an n-th reporting quantity according to a (n+1)-th measurement resource related information and reference measurement resource information;
determining, by the UE, an n-th reporting quantity according to an n-th measurement resource related information and a (n+1)-th measurement resource related information
determining, by the UE, an n-th reporting quantity according to the n-th measurement resource related information and the (n-1)-th measurement resource related information; or
determining, by the UE, an n-th reporting quantity according to k-th measurement resource related information and reference measurement resource information;
wherein n and k are greater than or equal to 1, and n and k are different.

Optionally, the determining, by the UE, the reporting quantity according to indexes or identifiers of multiple pieces of measurement resource related information, includes at least one of the following:
determining, by the UE, an m-th reporting quantity according to measurement resource related information corresponding to a measurement resource information identifier m and reference measurement resource information;
determining, by the UE, an m-th reporting quantity according to measurement resource related information corresponding to a measurement resource information identifier (m+1) and reference measurement resource information;
determining, by the UE, an m-th reporting quantity according to measurement resource related information corresponding to a measurement resource information identifier m and measurement resource related information corresponding to a measurement resource information identifier (m+1);
determining, by the UE, an m-th reporting quantity according to measurement resource related information corresponding to a measurement resource information identifier m and measurement resource related information corresponding to a measurement resource information identifier (m-1);
determining, by the UE, an m-th reporting quantity according to measurement resource related information corresponding to a measurement resource information identifier p and reference measurement resource information; or
determining, by the UE, the reporting quantity according to an order of indexes or identifiers of multiple pieces of measurement resource related information;
wherein m and p are greater than or equal to 0, and m is different from p.

Optionally, the method further includes at least one of the following:
determining, by the UE, the reference measurement resource information according to a predefined rule;
determining, by the UE, the reference measurement resource information according to configuration of the network device; or
determining, by the UE, that X-th measurement resource related information in the measurement resource related information is the reference measurement resource information, wherein X is greater than or equal to 1.

Optionally, the indication information of the measurement resource related information includes at least one of the following:
bit information corresponding to indexes or identifiers of measurement resource related information; or
indexes or identifiers of measurement resource related information.

Optionally, the reporting quantity includes a first reporting quantity part and a second reporting quantity part; the first reporting quantity part corresponds to a first quantization interval, the second reporting quantity part corresponds to a second quantization interval; a quantization range of the reporting quantity corresponding to the first quantization interval is different from a quantization range of the reporting quantity corresponding to the second quantization interval.

One embodiment of the present disclosure provides a measurement reporting method, including:
receiving, by a network device, a reporting quantity transmitted by a user equipment (UE), or receiving a reporting quantity and indication information of multiple pieces of measurement resource related information corresponding to the reporting quantity, transmitted by the UE;
wherein the reporting quantity includes at least one of the following:
time domain related parameter;
frequency domain related parameter; or
phase related parameter.

Optionally, the method further includes:
transmitting, by the network device, a configuration parameter corresponding to the measurement resource related information to the UE;
transmitting, by the network device, a measurement resource to the UE.

Optionally, the measurement resource related information and the configuration parameter satisfy a first rule, where the first rule includes at least one of the following:
one measurement resource related information corresponds to one configuration parameter;
one measurement resource related information group corresponds to one configuration parameter; or
a measurement resource related information group corresponding to a code division multiplexing (CDM) group corresponds to one configuration parameter.

Optionally, the method further includes:
determining, by the network device, measurement resource related information corresponding to the reporting quantity.

Optionally, the determining, by the network device, measurement resource related information corresponding to the reporting quantity, includes at least one of the following:
determining, by the network device, the measurement resource related information corresponding to the reporting quantity according to an order of the reporting quantities and a configuration order or an indication order of the measurement resource related information;
determining, by the network device, the measurement resource related information corresponding to the reporting quantity according to an order of the reporting quantities and indexes or identifiers of multiple pieces of measurement resource related information;
determining, by the network device, the measurement resource related information corresponding to the reporting quantity according to according to a second rule; or
determining, by the network device, the measurement resource related information corresponding to the reporting quantity according to indication information of the measurement resource related information included in the measurement information.

Optionally, the determining, by the network device, the measurement resource related information corresponding to the reporting quantity according to an order of the reporting quantities and indexes or identifiers of multiple pieces of measurement resource related information, includes at least one of the following:
determining, by the network device, that measurement resource related information corresponding to an n-th reporting quantity is: n-th measurement resource related information and reference measurement resource information; wherein the reference measurement resource information is one of the measurement resource related information;
determining, by the network device, that measurement resource related information corresponding to an n-th reporting quantity is: (n+1)-th measurement resource related information and reference measurement resource information;
determining, by the network device, that measurement resource related information corresponding to an n-th reporting quantity is: n-th measurement resource related information and (n+1)-th measurement resource related information;
determining, by the network device, that the measurement resource related information corresponding to an n-th reporting quantity is: n-th measurement resource related information and (n-1)-th measurement resource related information; or
determining, by the network device, that the measurement resource related information corresponding to an n-th reporting quantity is: k-th measurement resource related information and reference measurement resource information;
wherein n, k are greater than or equal to 1, and n and k are different.

Optionally, the determining, by the network device, the measurement resource related information corresponding to the reporting quantity according to an order of the reporting quantities and indexes or identifiers of multiple pieces of measurement resource related information, includes at least one of the following:
determining, by the network device, that measurement resource related information corresponding to an m-th reporting quantity includes: measurement resource related information corresponding to a measurement resource information identifier m and reference measurement resource information;
determining, by the network device, that the measurement resource related information corresponding to an m-th reporting quantity is: measurement resource related information corresponding to a measurement resource information identifier (m+1) and reference measurement resource information;
determining, by the network device, that measurement resource related information corresponding to an m-th reporting quantity is: measurement resource related information corresponding to a measurement resource information identifier m and measurement resource related information corresponding to a measurement resource information identifier (m+1);
determining, by the network device, that measurement resource related information corresponding to an m-th reporting quantity is: measurement resource related information corresponding to a measurement resource information identifier m and measurement resource related information corresponding to a measurement resource information identifier (m-1);
determining, by the network device, that measurement resource related information corresponding to an m-th reporting quantity is: measurement resource related information corresponding to a measurement resource information identifier p and reference measurement resource information; wherein m and p are greater than or equal to 0, and m and p are different; or
determining, by the network device, indexes or identifiers of measurement resource related information according to an order of reporting quantities;
wherein m and p are greater than or equal to 0, and m is different from p.

Optionally, the method further includes at least one of the following:
determining, by the network device, the reference measurement resource information according to a predefined rule;
determining, by the network device, that Y-th measurement resource related information in the measurement resource related information is the reference measurement resource information, wherein Y is greater than or equal to 1; or
determining, by the network device, the reference measurement resource information according to an indication of the UE.

Optionally, the indication information of the measurement resource related information includes at least one of the following:
bit information corresponding to indexes or identifiers of measurement resource related information; or
indexes or identifiers of measurement resource related information.

Optionally, the reporting quantity includes: a first reporting quantity part and a second reporting quantity part; the first reporting quantity part corresponds to a first quantization interval, the second reporting quantity part corresponds to a second quantization interval; a quantization range of the reporting quantity corresponding to the first quantization interval is different from a quantization range of the reporting quantity corresponding to the second quantization interval.

One embodiment of the present disclosure provides a user equipment (UE), including: a memory, a transceiver, and a processor;
wherein the memory is used to store a computer program; the transceiver is used to receive and send data under the control of the processor; the processor is used to read the computer program in the memory and perform the following operations:
determining a reporting quantity according to multiple pieces of measurement resource related information;
reporting the reporting quantity to a network device, or reporting the reporting quantity and indication information of the multiple pieces of measurement resource related information corresponding to the reporting quantity to the network device;
wherein the reporting quantity includes at least one of the following:
time domain related parameter;
frequency domain related parameter; or
phase related parameter.

Optionally, the processor is used to read the computer program in the memory and perform the following operations:
determining a configuration parameter corresponding to the measurement resource related information;
receiving the measurement resource related information according to the configuration parameter;
wherein the measurement resource related information includes at least one of the following: measurement resource, port of measurement resource, or measurement resource set.

Optionally, the processor is used to read the computer program in the memory and perform the following operations:
determining configuration parameter corresponding to the measurement resource related information according to a first rule;
   or,
determining configuration parameter corresponding to measurement resource related information according to configuration information of the network device;
wherein the configuration parameter includes transmission configuration indication (TCI) state and/or quasi co-location (QCL) parameter.

Optionally, the processor is used to read the computer program in the memory and perform at least one of the following operations:
determining a reference configuration parameter in the configuration parameter, and receiving a measurement resource by using the reference configuration parameter;
determining a first configuration parameter according to the configuration parameter and a reporting quantity configured by the network device, and receiving a measurement resource by using the first configuration parameter; or,
receiving a measurement resource based on a configuration parameter type included in the configuration parameter.

Optionally, the processor is used to read the computer program in the memory and perform at least one of the following operations:
determining the reporting quantity according to a configuration order or an indication order of multiple pieces of measurement resource related information; or
determining the reporting quantity according to indexes or identifiers of multiple pieces of measurement resource related information.

Optionally, the processor is used to read the computer program in the memory and perform at least one of the following operations:
determining an n-th reporting quantity according to n-th measurement resource related information and reference measurement resource information, wherein the reference measurement resource information is one of the measurement resource related information;
determining an n-th reporting quantity according to a (n+1)-th measurement resource related information and reference measurement resource information;
determining an n-th reporting quantity according to an n-th measurement resource related information and a (n+1)-th measurement resource related information
determining an n-th reporting quantity according to the n-th measurement resource related information and the (n-1)-th measurement resource related information; or
determining an n-th reporting quantity according to k-th measurement resource related information and reference measurement resource information;
wherein n and k are greater than or equal to 1, and n and k are different.

Optionally, the processor is used to read the computer program in the memory and perform at least one of the following operations:
determining an m-th reporting quantity according to measurement resource related information corresponding to a measurement resource information identifier m and reference measurement resource information;
determining an m-th reporting quantity according to measurement resource related information corresponding to a measurement resource information identifier (m+1) and reference measurement resource information;
determining an m-th reporting quantity according to measurement resource related information corresponding to a measurement resource information identifier m and measurement resource related information corresponding to a measurement resource information identifier (m+1);
determining an m-th reporting quantity according to measurement resource related information corresponding to a measurement resource information identifier m and measurement resource related information corresponding to a measurement resource information identifier (m-1);
determining an m-th reporting quantity according to measurement resource related information corresponding to a measurement resource information identifier p and reference measurement resource information; or
determining the reporting quantity according to an order of indexes or identifiers of multiple pieces of measurement resource related information;
wherein m and p are greater than or equal to 0, and m is different from p.

Optionally, the indication information of the measurement resource related information includes at least one of the following:
bit information corresponding to indexes or identifiers of measurement resource related information; or
indexes or identifiers of measurement resource related information.

One embodiment of the present disclosure provides a network device, including: a memory, a transceiver, and a processor;
wherein the memory is used to store a computer program; the transceiver is used to receive and send data under the control of the processor; the processor is used to read the computer program in the memory and perform the following operations:
receiving a reporting quantity transmitted by a user equipment (UE), or receiving a reporting quantity and indication information of multiple pieces of measurement resource related information corresponding to the reporting quantity, transmitted by the UE;
wherein the reporting quantity includes at least one of the following:
time domain related parameter;
frequency domain related parameter; or
phase related parameter.

Optionally, the processor is used to read the computer program in the memory and perform the following operations:
transmitting a configuration parameter corresponding to the measurement resource related information to the UE;
transmitting a measurement resource to the UE.

Optionally, the processor is used to read the computer program in the memory and perform the following operations:
determining measurement resource related information corresponding to the reporting quantity.

Optionally, the processor is used to read the computer program in the memory and perform at least one of the following operations:
determining the measurement resource related information corresponding to the reporting quantity according to an order of the reporting quantities and a configuration order or an indication order of the measurement resource related information;
determining the measurement resource related information corresponding to the reporting quantity according to an order of the reporting quantities and indexes or identifiers of multiple pieces of measurement resource related information;
determining the measurement resource related information corresponding to the reporting quantity according to according to a second rule; or
determining the measurement resource related information corresponding to the reporting quantity according to indication information of the measurement resource related information included in the measurement information.

Optionally, the processor is used to read the computer program in the memory and perform at least one of the following operations:
determining that measurement resource related information corresponding to an n-th reporting quantity is: n-th measurement resource related information and reference measurement resource information; wherein the reference measurement resource information is one of the measurement resource related information;
determining that measurement resource related information corresponding to an n-th reporting quantity is: (n+1)-th measurement resource related information and reference measurement resource information;
determining that measurement resource related information corresponding to an n-th reporting quantity is: n-th measurement resource related information and (n+1)-th measurement resource related information;
determining that the measurement resource related information corresponding to an n-th reporting quantity is: n-th measurement resource related information and (n-1)-th measurement resource related information; or
determining that the measurement resource related information corresponding to an n-th reporting quantity is: k-th measurement resource related information and reference measurement resource information;
wherein n, k are greater than or equal to 1, and n and k are different.

Optionally, the processor is used to read the computer program in the memory and perform at least one of the following operations:
determining that measurement resource related information corresponding to an m-th reporting quantity includes: measurement resource related information corresponding to a measurement resource information identifier m and reference measurement resource information;
determining that the measurement resource related information corresponding to an m-th reporting quantity is: measurement resource related information corresponding to a measurement resource information identifier (m+1) and reference measurement resource information;
determining that measurement resource related information corresponding to an m-th reporting quantity is: measurement resource related information corresponding to a measurement resource information identifier m and measurement resource related information corresponding to a measurement resource information identifier (m+1);
determining that measurement resource related information corresponding to an m-th reporting quantity is: measurement resource related information corresponding to a measurement resource information identifier m and measurement resource related information corresponding to a measurement resource information identifier (m-1);
determining that measurement resource related information corresponding to an m-th reporting quantity is: measurement resource related information corresponding to a measurement resource information identifier p and reference measurement resource information; wherein m and p are greater than or equal to 0, and m and p are different; or
determining indexes or identifiers of measurement resource related information according to an order of reporting quantities;
wherein m and p are greater than or equal to 0, and m is different from p.

Optionally, the indication information of the measurement resource related information includes at least one of the following:
bit information corresponding to indexes or identifiers of measurement resource related information; or
indexes or identifiers of measurement resource related information.

One embodiment of the present disclosure provides a measurement reporting apparatus, including:
a first determining unit used to determine a reporting quantity according to multiple pieces of measurement resource related information;
a first determining unit used to report the reporting quantity to a network device, or report the reporting quantity and indication information of the multiple pieces of measurement resource related information corresponding to the reporting quantity to the network device;
wherein the reporting quantity includes at least one of the following:
time domain related parameter;
frequency domain related parameter; or
phase related parameter.

One embodiment of the present disclosure provides a measurement reporting apparatus, including:
a first receiving unit used to receive a reporting quantity transmitted by a user equipment (UE), or receiving a reporting quantity and indication information of multiple pieces of measurement resource related information corresponding to the reporting quantity, transmitted by the UE;
wherein the reporting quantity includes at least one of the following:
time domain related parameter;
frequency domain related parameter; or
phase related parameter.

One embodiment of the present disclosure provides a processor-readable storage medium, including: a computer program stored thereon; wherein the computer program is used to cause a processor to execute steps of the above measurement reporting method.

The beneficial effects of the above technical solution of the present disclosure are as follows.

In one embodiment of the present disclosure, the UE determines a reporting quantity based on multiple pieces of measurement resource related information and reports the reporting quantity to the network side device. The UE may also transmit indication information of multiple pieces of measurement resource related information corresponding to the reporting quantity to the network device, so that the network device can compensate for transmit signals of the TRP based on the reporting quantity and the measurement resource related information corresponding to the reporting quantity, thereby eliminating the parameter differences between the TRPs, synchronizing signals between the multiple TRPs received by the UE, and ensuring the transmission performance of the CJT.

### BRIEF DESCRIPTION OF THE DRAWINGS

FIG. 1 is a first flow chart of a measurement reporting method according to an embodiment of the present disclosure;
FIG. 2 is a second flow chart of a measurement reporting method according to an embodiment of the present disclosure;
FIG. 3 is a first schematic diagram of a measurement reporting apparatus according to an embodiment of the present disclosure;
FIG. 4 is a second schematic diagram of a measurement reporting apparatus according to an embodiment of the present disclosure;
FIG. 5 is a schematic diagram of a UE according to an embodiment of the present disclosure; and
FIG. 6 is a schematic diagram of a network device according to an embodiment of the present disclosure.

### DETAILED DESCRIPTION

In order to make the technical problems, the technical solutions and the advantages of the present disclosure more apparent, the present disclosure will be described hereinafter in conjunction with the drawings and embodiments. In the following descriptions, to facilitate understanding embodiments of the present disclosure, specific configurations and specific details of components are provided. Thus, persons having ordinary skill in the art should understand that, various changes and modifications may be made to the embodiments described here, without departing from scope and spirit of the present disclosure. In addition, for clarity and simplicity, descriptions about known functions and constructions are omitted.

It is to be understood that, the phrase "one embodiment" or "an embodiment" as used throughout the specification means that a particular feature, structure, or characteristic relating to an embodiment is included in at least one embodiment of the present disclosure. Thus, "in one embodiment" or "in an embodiment" as used throughout the specification does not necessarily refer to the same embodiment. In addition, these specific features, structures, or characteristics may be combined in any suitable manner in one or more embodiments.

In various embodiments of the present disclosure, it is to be understood that, the sequence numbers of the following processes do not imply the order of execution. The order of execution of each process should be determined by its function and internal logic, which should not constitute any limitation to the implementation processes of the embodiments of the application.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "/" generally means that relationship between associated objects before and after the character "/" is "or".

The term "plurality" in the embodiments of the present disclosure means two or more, and other quantifiers are similar.

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

In case that describing the embodiments of the present disclosure, some concepts used in the following description will first be explained.

### 1. CJT transmission

The CJT technology supports coherent transmission of up to 4 TRPs. It is assumed that channels between the 4 TRPs and user equipment (UE) are Hᵢ, respectively, a signal y received by the UE can be expressed as: $y = \left[{H}_{1} {H}_{2} {H}_{3} {H}_{4}\right] Wx + n$ where W represents a precoding codeword for joint transmission of four TRPs, x represents a signal sent by each TRP; and n represents receiver noise. It can be seen from the above formula that in the CJT transmission, the precoding codeword is determined jointly according to channel conditions of all TRPs.

### 2. Measurement reporting technology

It includes beam measurement reporting and channel state information (CSI) measurement reporting. In the CSI reporting, the network device can configure a CSI resource setting for the UE, which includes one or more CSI resource sets. Each CSI resource set includes one or more CSI reference signal (CSI-RS) resources, and the UE performs reporting according to reporting parameters configured by the network device.

The embodiments of the present disclosure provide a measurement reporting method and apparatus, UE and network device, which can solve the problem of poor transmission performance of CJT.

The method and apparatus are based on the same application concept. Since the method and the apparatus solve the problem in a similar principle, implementation of the apparatus and the method can refer to each other, and the repeated parts will not be repeated.

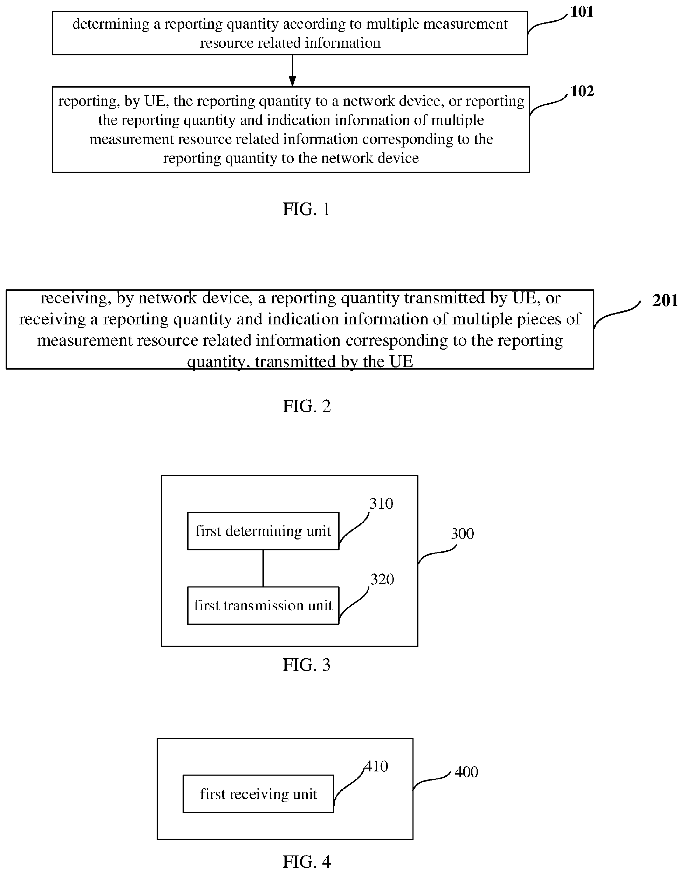

As shown in FIG. 1, one embodiment of the present disclosure provides a measurement reporting method, which is applied to a UE and specifically includes the following steps:
Step 101: determining a reporting quantity according to multiple pieces of measurement resource related information.
Step 102: reporting, by the UE, the reporting quantity to a network device, or reporting the reporting quantity and indication information of multiple pieces of measurement resource related information corresponding to the reporting quantity to the network device;
The reporting quantity includes at least one of the following:
   time domain related parameter; where the time domain related parameter may be a time domain related parameter between the multiple pieces of measurement resource related information;
   frequency domain related parameter; where the frequency domain related parameter may be a frequency domain related parameter between the multiple pieces of measurement resource related information; or
   phase related parameter; where the phase related parameter may be a phase related parameter between the multiple pieces of measurement resource related information.

In this embodiment, the measurement resource related information includes at least one of the following: measurement resource, port of measurement resource, or measurement resource sets; that is, the UE can determine the reporting quantity based on multiple measurement resources; and/or, the UE can determine the reporting quantity based on multiple port of measurement resources; and/or, the UE can determine the reporting quantity based on multiple measurement resource sets. The measurement resource includes, for example, CSI-RS resource, synchronization signal block (SSB) resource, phase-tracking reference signal (TRS) resources. The port of measurement resource includes, for example, a port corresponding to CSI-RS resource, a port corresponding to SSB resource, a port corresponding to TRS resources. The measurement resource set includes, for example, CSI-RS resource set, SSB resource set. The measurement resource can also be resources of other reference signals, which are not limited here.

The reporting quantity may be a time domain related parameter, a frequency domain related parameter, a phase related parameter, etc. between the multiple measurement resource sets. The time domain related parameter includes, for example, time difference, time difference between multiple measurement resource sets, time difference between multiple measurement resources, and time difference between multiple port of measurement resources. The time domain related parameter may also be delay difference, time correlation, time correlation factor, delay spread, delay power spectrum density, etc. The time domain related parameter may also be Doppler spread, Doppler frequency shift, etc. Although Doppler spread and Doppler frequency shift are parameters that characterize frequency, they can also be used to characterize time domain related parameters because the time and frequency domains can be correlated and converted. The time domain related parameter may also be one or more precoding matrices or precoding codewords in the codebook representing the time domain parameters. The time domain related parameter between multiple pieces of measurement resource related information refers to a time domain related parameter determined by the UE based on multiple pieces of measurement resource related information.

The frequency domain related parameter includes, for example, frequency difference, frequency difference between multiple measurement resource sets, frequency difference between multiple measurement resources, and frequency difference between multiple port of measurement resources. The frequency domain related parameter can also be frequency deviation, frequency power spectrum density, Doppler shift, Doppler spread, frequency correlation, and frequency correlation factor. The frequency domain related parameter can also be delay spread and time correlation. Although delay spread and time correlation are parameters that characterize time, they can also be used to characterize frequency domain related parameters because the time-frequency domain can be correlated and converted. The frequency domain related parameter can also be one or more precoding matrices or precoding codewords in the code book representing the frequency domain parameters. The frequency domain related parameter between multiple pieces of measurement resource related information refers to a frequency domain related parameter determined by the UE based on multiple pieces of measurement resource related information.

The phase-related parameter includes, for example, phase difference, such as phase difference caused by time asynchrony, frequency asynchrony or lack of reciprocity, phase difference between multiple measurement resource sets, phase difference between multiple measurement resources, and phase difference between multiple port of measurement resources. The phase-related parameter may also be one or more precoding matrices or precoding codewords in a codebook representing phase parameters. The frequency domain-related parameter between multiple pieces of measurement resource related information refers to a phase-related parameter determined by the UE based on multiple pieces of measurement resource related information.

The UE may determine one reporting quantity based on multiple pieces of measurement resource related information, for example, the UE determines one time difference based on two measurement resources, the UE determines one frequency difference based on two measurement resources, and the UE determines one phase difference based on two measurement resources.

In case of reporting the reporting quantity to the network device, the UE may directly report a numerical value or quantized value of the reporting quantity, or indicate the numerical value of the reporting quantity in other ways, for example, the UE reports a precoding matrix indicator (PMI), and the PMI may implicitly indicate the numerical value of the reporting quantity, such as the precoding codeword [1 1]*^{T}* indicates that a phase difference determined according to 2 measurement resources is 0 degrees, and the precoding codeword [1 *j*]*^{T}* indicates that a phase difference determined according to 2 measurement resources is 90 degrees. The UE may also report the reporting quantity in other ways, which are not limited here.

In case that reporting the reporting quantity to the network device, the UE can also report indication information of multiple pieces of measurement resource related information corresponding to the reporting quantity. After the network device receives the reporting quantity and the indication information, the network device can determine specific measurement resource related information corresponding to each reporting quantity, and then compensate a transmit signal based on the reporting quantity to eliminate transmission parameter error between the TRPs corresponding to each measurement resource related information. By taking the reporting quantity being time difference as an example, based on the indication information, the network device determines, on which two measurement resources (or port of measurement resources or measurement resource sets), a time difference is determined, so as to accurately know a measurement resource corresponding to the time difference and the corresponding TRP. The network device can compensate the sent signal based on the time difference and the corresponding TRP to eliminate the time difference between multiple TRPs.

Optionally, in case that the UE does not transmit to the network device, the indication information of multiple pieces of measurement resource related information corresponding to the reporting quantity, the network device can determine measurement resource related information corresponding to the reporting quantity based on predefined rules, or the network device can determine measurement resource related information corresponding to the reporting quantity based on an order of reporting quantities.

In one embodiment of the present disclosure, the UE determines a reporting quantity based on multiple pieces of measurement resource related information and reports the reporting quantity to the network side device. The UE may also transmit indication information of multiple pieces of measurement resource related information corresponding to the reporting quantity to the network device, so that the network device can compensate for transmit signals of the TRP based on the reporting quantity and the measurement resource related information corresponding to the reporting quantity, thereby eliminating the parameter differences between the TRPs, synchronizing signals between the multiple TRPs received by the UE, and ensuring the transmission performance of the CJT.

As an optional embodiment, the method further includes:
determining a configuration parameter corresponding to the measurement resource related information; receiving the measurement resource related information according to the configuration parameter;
where the measurement resource related information includes at least one of the following: measurement resource, port of measurement resource, or measurement resource set.

In this embodiment, the UE can determine the configuration parameter corresponding to the measurement resource related information, and use the corresponding configuration parameter to receive the measurement resource related information. The configuration parameter includes, for example, TCI state, QCL parameter, beam index, or other time domain, frequency domain or spatial domain transmission parameters. By taking the measurement resource related information being the port of measurement resource as an example, the UE can determine the TCI state or QCL parameter corresponding to each port of measurement resource, so as to receive the measurement resource according to the corresponding TCI state or QCL parameter, so that the UE receives the correct measurement resource, thereby accurately measuring the reporting quantity.

Optionally, the determining a configuration parameter corresponding to the measurement resource related information, includes:
determining the configuration parameter corresponding to the measurement resource related information according to a first rule;
   or,
determining the configuration parameter corresponding to measurement resource related information according to configuration information of the network device;
where the configuration parameter includes transmission configuration indication TCI state and/or quasi co-location QCL parameter.

In this embodiment, each measurement resource related information may be transmitted by multiple TRPs, thus each measurement resource related information may correspond to different configuration parameters. The UE can determine the configuration parameter corresponding to the measurement resource related information based on the first rule, and the first rule is a predefined rule. The UE and the network device both determine the configuration parameter of the measurement resource related information based on the same first rule. For example, the network device configures multiple TCI states and/or QCL parameters for each measurement resource, and the UE determines, according to the first rule, which TCI state and/or QCL parameter among the multiple TCI states and/or QCL parameters configured on the network side, corresponds to each port of measurement resource index.

Optionally, the first rule includes at least one of the following:
(1) one measurement resource related information corresponds to one configuration parameter; for example, one port of measurement resource corresponds to one TCI state or QCL parameter.
   By taking the measurement resource being a CSI-RS resource as an example, one CSI-RS resource is configured with 4 TCI states, and one CSI-RS resource includes 4 CSI-RS ports. Then, the UE determines that each CSI-RS port corresponds to one configured QCL parameter, and ports correspond to the configured TCI states respectively in the order of increasing CSI-RS port index, for example, CSI-RS port 0 corresponds to a first configured TCI state, CSI-RS port 1 corresponds to a second configured TCI state, CSI-RS port 2 corresponds to a third configured TCI state, and CSI-RS port 4 corresponds to a fourth configured TCI state.
(2) one measurement resource related information group corresponds to one configuration parameter; for example, one port of measurement resource group corresponds to one TCI state or QCL parameter.
   By taking the measurement resource being a CSI-RS resource as an example, one CSI-RS resource is configured with 4 TCI states, and one CSI-RS resource includes 32 CSI-RS ports. Then, the UE determines that CSI-RS ports 0-7 correspond to a first configured TCI state, CSI-RS ports 8-15 correspond to a second configured TCI state, CSI-RS ports 16-23 correspond to a third configured TCI state, and CSI-RS ports 24-31 correspond to a fourth configured TCI state.
(3) a measurement resource related information group corresponding to a code division multiplexing (CDM) group corresponds to one configuration parameter. For example, a port of measurement resource (or port group) corresponding to a CDM group corresponds to one TCI state or QCL parameter.

By taking the measurement resource being a CSI-RS resource as an example, one or more ports in the same CDM group correspond to a configured TCI state. A high layer parameter CDM type (cdm-Type) configures CDM situations. In case that 2, 4 or 8 CDM groups are configured, TCI states or QCL parameters corresponding to ports in one CDM group are the same. The cdm-Type may be, for example, {noCDM, fd-CDM2, cdm4-FD2-TD2, cdm8-FD2-TD4}. In case that the cdm-Type is configured to fd-CDM2, there are 2 CDM groups in total. In case that 2 TCI states are configured on the network side, ports in CDM group 0 correspond to one TCI state, and ports in CDM group 1 correspond to another TCI state.

The UE may also determine the configuration parameter corresponding to the measurement resource related information according to configuration of the network device. For example, the UE determines a QCL parameter or TCI state corresponding to each port of measurement resource (or port group) according to the configuration of the network device. by taking the measurement resource being a CSI-RS resource as an example, the network device configures the TCI state corresponding to each CSI-RS port group, for example, CSI-RS ports 0-5 correspond to a first configured TCI state, CSI-RS ports 6-13 correspond to a second configured TCI state, CSI-RS ports 14-15 correspond to a third configured TCI state, and CSI-RS ports 16-17 correspond to a fourth configured TCI state. In this case, there is no need to require that the number of CSI-RS ports corresponding to each TRP is the same.

Alternatively, in case that the number of ports of the CSI-RS resource is 32 and the cdm-Type is configured as cdm4-FD2-TD2, the CSI-RS resource includes a total of 8 CDM groups, and the network device can configure a TCI state corresponding to each CDM group. For example, ports corresponding to CDM groups 0-2 correspond to a first configured TCI state, ports corresponding to CDM groups 3-4 correspond to a second configured TCI state, ports corresponding to CDM groups 5-6 correspond to a third configured TCI state, and ports corresponding to CDM group 7 correspond to a fourth configured TCI state.

In this embodiment, the UE determines the configuration parameter corresponding to the measurement resource related information based on the first rule or the configuration information of the network device. Even if the measurement resource has multiple ports corresponding to multiple TRPs, the UE can accurately determine correspondence between each port and the configuration parameter, thereby being able to accurately receive the measurement resource with the corresponding configuration parameter.

In some cases, in case that the UE is measuring and reporting time domain related parameter, frequency domain related parameter or phase related parameter, it may be necessary to use other, non-configured TCI state or QCL parameter to receive measurement resource related information. For example, four ports of one measurement resource are sent by four TRPs respectively, and the four ports correspond to different TCI states or QCL parameters. However, in order to measure a time difference between two TRPs, the UE needs to use a receiving timing or time domain parameter of one of the TRPs to receive all the ports sent by the TRPs, and then perform time difference measurement. In this case, the UE also needs to determine the TCI state or QCL parameter used in case that receiving the measurement resource related information. As an optional embodiment, the receiving the measurement resource related information according to the configuration parameter, includes at least one of the following:
(A) determining a reference configuration parameter in the configuration parameters, and receiving a measurement resource by using the reference configuration parameter.

In this embodiment, the UE may use the reference configuration parameter in the configuration parameter to receive the measurement resource. Optionally, determining the reference configuration parameter in the configuration parameter, includes at least one of the following:
a1) determining the reference configuration parameter according to a predefined rule; where the UE and the network device both determine the reference configuration parameter based on the same predefined rule. The predefined rule is, for example, that: the UE determines that a first configuration parameter configured on the network side is the reference configuration parameter, a last configuration parameter configured on the network side is the reference configuration parameter, and an x-th configuration parameter configured on the network side is the reference configuration parameter. By taking the configuration parameter being a TCI state or QCL parameter as an example, the first TCI state or QCL parameter configured on the network side is predefined as a reference TCI state or QCL parameter, and the UE uses the reference TCI state or QCL parameter (such as Doppler shift) to receive measurement resources. This embodiment can be applied to measurement of time domain related parameter, frequency domain related parameter, or phase related parameter. For another example, the UE determines a QCL parameter with a smallest parameter value as the reference QCL parameter In case that the network side configures 4 'type A' QCL parameters, and the 4 'type A' parameters have different delay spread values, or have different average delay values, or have different Doppler frequency shift values, or have different Doppler spread values, then the UE determines the QCL parameter with the smallest delay spread value, or the smallest average delay value, or the smallest Doppler frequency shift value or the smallest Doppler spread value among the 4 QCL parameters as the reference configuration parameter.

Optionally, the measurement resource may also be received by using some configuration parameters according to a predefined rule. For example, in case that a TCI state includes 2 QCL parameters or 2 QCL types, it may also be determined according to the predefined rule to use some QCL parameters or QCL types of some TCI states to receive the measurement resource. For example, according to the predefined rule, ports (port 0 and port 1) corresponding to two TRPs are respectively configured with 2 QCL parameters, both of which are 'type A' and 'type D'; in case that reporting time difference or frequency difference measurements, although the two TRPs use different TCI states or QCL parameters, for the corresponding ports of the two TRPs, the UE uses the QCL parameter 'type A' ('type A' type QCL parameter) corresponding to one of the TRPs or ports for reception. The 'type A' may include parameters such as Doppler shift, Doppler spread, average delay, delay spread, {Doppler shift, Doppler spread, average delay, delay spread}, etc. The 'type D' may include a parameter such as a spatial reception parameter {Spatial Rx parameter}.

For another example, in case that the QCL parameters of multiple ports or all ports include 'type D', different ports use their own QCL-type D for reception, but use a reference port or reference QCL parameter of one type (such as 'type A' type or 'type B' type or 'type C' type) for reception, where the type B parameter may include parameters such as Doppler shift, Doppler spread; the type C parameter may include parameters such as Doppler shift, average delay. For example, for TRP 1 to TRP 4, the QCL parameter configurations are as follows:
TRP 1 corresponds to port 0, and the configuration parameters are: type A 1+type D 1;
TRP 2 corresponds to port 1, and the configuration parameters are: type A 2+type D 2;
TRP 3 corresponds to port 2, and the configuration parameters are: type A 3 + type D 3;
TRP 4 corresponds to port 3, and the configuration parameters are: type A 4+type D 4.

In case that receiving a measurement resource, the four ports of the measurement resource all use the following QCL parameters for reception:
TRP 1 port 0 type A 1+type D 1;
TRP 2 ports 1 type A 1+type D 2;
TRP 3 ports 2 type A 1+type D 3;
TRP 4 ports 3 type A 1+type D 4.
a2) determining the reference configuration parameter according to an indication of the network device.

In this embodiment, the network device may configure or indicate which configuration parameter is used as the reference configuration parameter. For example, in a measurement report, the network device configures or indicates the UE to use a third TCI state or QCL parameter configured for the measurement resource as the reference TCI state or QCL parameter to receive the CSI-RS resource.

For example, for periodic CSI-RS resource or semi-persistent CSI-RS resource, a high layer parameter is used to configure which configured TCI state or QCL parameter serves as the reference configuration parameter; for non-periodic CSI-RS resource, a trigger state configuration can specify which TCI state or QCL parameter serves as the reference configuration parameter. In this way, the UE can determine the reference TCI state or QCL parameter through indication in downlink control information (DCI).

Optionally, the network device may also configure or indicate the UE to use some of the configuration parameters to receive the measurement resources. For example, in case that one TCI state includes two QCL parameters, the network device may also configure or indicate the UE to use some QCL parameters of some of the TCI states to receive CSI-RS resources, such as the network side indicating the UE to use an m-th QCL parameter of a configured n-th TCI state to receive the measurement resources, or the network side indicates the UE to use an m-th 'type A' QCL parameter of a configured n-th TCI state to receive the measurement resources.
a3) the UE determines that an N-th configuration parameter in the configuration parameters is the reference configuration parameter, where N is greater than or equal to 1.

In this embodiment, the reference configuration parameter is determined by the UE itself. The UE can determine that an N-th configuration parameter is the reference configuration parameter. For example, the UE determines a first configuration parameter as the reference configuration parameter and the last configuration parameter as the reference configuration parameter. The UE can also determine a specific reference configuration parameter based on measurement. For example, in case that performing time difference measurement, in case that the UE determines that a reception timing of a third configuration parameter (corresponding to a third TRP) is the same as a current downlink reception timing (e.g., the current downlink timing uses the reception timing of the third TRP), then the UE determines to take the third configuration parameter as the reference configuration parameter. For another example, in case that reporting time difference or frequency difference, in case that the UE determines the reporting quantity based on four configuration parameters, in case that the fourth configuration parameter is used as a reference, it can be ensured that all reporting quantities are positive or negative. For example, a port of measurement resource corresponding to the fourth configuration parameter is first received by the UE or has the lowest reception frequency, and taking the fourth configuration parameter as a reference can reduce the feedback overhead. In this case, the reference configuration parameter is not only used for the UE to receive the measurement resource, but also used to determine the order of the reporting quantity, that is, the UE determines the reporting quantity according to the reference configuration parameter.

Optionally, in case that the UE determines that the N-th configuration parameter in the configuration parameters is the reference configuration parameter, that is, the configuration parameter is determined by the UE, the method further includes: reporting indication information of the reference configuration parameter to the network device, used to indicate that the reference configuration parameter is the N-th configuration parameter in the configuration parameters.

(B) determining a first configuration parameter according to the configuration parameter and a reporting quantity configured by the network device, and receiving a measurement resource by using the first configuration parameter.

In this embodiment, the UE may determine the first configuration parameter for receiving the measurement resource based on the configuration parameter and the reporting quantity configured by the network device. For example, the TCI state or QCL parameter may be determined according to the reporting quantity configured by the network device.

Optionally, the determining a first configuration parameter according to the configuration parameter and a reporting quantity configured by the network device, includes at least one of the following:
b1) in case that the reporting quantity configured by the network device is a first reporting type, determining that the first configuration parameter is a reference configuration parameter in the configuration parameters.

In this embodiment, the first reporting type may be: time domain related parameter, frequency domain related parameter, phase related parameter. In case that the reporting quantity is the first reporting type, partial TCI states or partial QCL parameters are used to receive measurement resources according to the method in (A). Specifically, the N-th TCI state or QCL parameter is used as a reference TCI state or QCL parameter for reception and measurement; or, the TCI state or QCL parameter configured or indicated by the network device is used as a reference TCI state or QCL parameter for reception and measurement; or, the UE determines which TCI state or QCL parameter is used as a reference TCI state or QCL parameter for reception and measurement.
b2) in case that the reporting quantity configured by the network device is not the first reporting type, determining that the first configuration parameter is all configuration parameters configured by the network device.

In this embodiment, in case that the reporting quantity configured by the network device is not the first reporting type, all configured configuration parameters are used to receive measurement resources. For example, in case that the reporting quantity configured by the network device is not the first reporting type, all configured TCI states or QCL parameters are used to receive measurement resources. Examples of the reporting quantity configured by the network device being not of the first reporting type, include: L1-RSRP reporting (e.g., in case that the higher layer parameter reportQuantity is configured as cri-RSRP), PMI and CQI reporting (e.g., in case that the higher layer parameter reportQuantity is configured as cri-RI-PMI-CQI), and so on.

Optionally, the UE may also determine a second configuration parameter according to a precoding codebook configured by the network device, and use the second configuration parameter to receive the measurement resource.

Optionally, the determining a second configuration parameter according to a precoding codebook configured by the network device, includes at least one of the following:
b3) in case that the precoding codebook configured by the network device is a first type, determining that the second configuration parameter is a reference configuration parameter in the configuration parameters.

In this embodiment, the first type may be a precoding codebook representing time domain related parameters, a precoding codebook representing frequency domain related parameters, or a precoding codebook representing phase related parameters. In this case, according to the method in (A), partial TCI states or partial QCL parameters are used to receive measurement resources, and the specific method is not repeated here.
b4) in case that the precoding codebook configured by the network device is not the first type, determining that the first configuration parameter includes all configuration parameters configured by the network device.

In this embodiment, in case that the precoding codebook configured by the network device is not the first type, all configured parameters are used to receive the measurement resources. For example, in case that the precoding codebook configured by the network device (corresponding to the high layer parameter codebookType) is not the first type (e.g., it is not a precoding codebook for representing time-domain correlation parameters, nor for representing frequency-domain correlation parameters, nor for representing phase related parameters), all configured TCI states or QCL parameters are used to receive the measurement resources.

(C) receiving a measurement resource based on a configuration parameter type included in the configuration parameter.

Optionally, the receiving a measurement resource based on a configuration parameter type included in the configuration parameter, includes:
in case that the configuration parameter includes a spatial parameter, using different spatial parameters for each measurement resource related information to receive the measurement resource; or,
in case that the configuration parameter includes a time domain parameter or frequency domain parameter, using the same time domain parameter or the same frequency domain parameter for each measurement resource related information to receive the measurement resource; or,
for one measurement resource, the UE receives the measurement resource according to a configuration parameter type configured by the network device; where the network device configures at most one time domain parameter or at most one frequency domain parameter, and/or configures one or more spatial domain parameters for one measurement resource.

In this embodiment, the configuration parameter type may include: type A, type B, type C, type D. The spatial domain parameter is, for example, type D; the time domain parameter is, for example, type A or type B; the frequency domain parameter is, for example, type A, type B, type C. The UE may receive the measurement resource based on the configuration parameter type. Each port of measurement resource uses a different spatial domain parameter to receive the measurement resource; multiple port of measurement resources may use the same time domain parameter or frequency domain parameter to receive the measurement resource. Alternatively, the UE may determine that the network device will configure at most one time domain parameter or at most one frequency domain parameter for a measurement resource, and/or configure one or more spatial domain parameters, then the UE may receive the measurement resource according to the configuration parameter type configured by the network device.

For example, in case that the network device configures the TCI state or QCL parameter of the measurement resource for the UE, at most one type A, type B or type C parameter is configured, and multiple type D parameters can be configured. The port of measurement resource (or port group) uses the same type A, type B or type C parameter for reception. In case that configuring the type D parameter, the port of measurement resource (or port group) uses different type D parameters for reception. The UE does not expect the network side to configure more than one type A, type B or type C parameter for a measurement resource, or the UE does not expect the network side to configure multiple type A, type B or type C parameters with different values for a measurement resource.

In case that multiple type D parameters are configured, each port of measurement resource can determine a type D according to the following QCL parameter or TCI state determination method.

### Method 1

| | |
|---|---|
| qcl-InfoPeriodicCSI-RS | TCI-StateId 1, TCI-StateId 2, TCI-StateId 3, TCI-StateId 4 |

In this method, each TCI state identifier (ID) may include at most 2 QCL types, and the UE expects that type A, type B, or type C under each TCI state ID are the same.

### Method 2

| | |
|---|---|
| qcl-InfoPeriodicCSI-RS | TCI-StateId 1 |

TCI-StateId 1 configuration includes one type A or type B or type C, and can include multiple type Ds, such as 4 or 8.

In this embodiment, the UE determines a configuration parameter corresponding to each measurement resource or port of measurement resource or measurement resource set, and receives the measurement resource based on the configuration parameter. In case that multiple port of measurement resources are included and correspond to multiple TRPs, the UE can also accurately determine parameters corresponding to each port of measurement resource, thereby using the corresponding parameters to receive the measurement resources and ensuring the accuracy of the measurement.

As an optional embodiment, the determining a reporting quantity according to the multiple pieces of measurement resource related information, includes at least one of the following:
1) determining a reporting quantity according to at least two measurement resources of a measurement resource set; where the measurement resource set includes multiple measurement resources.

In this embodiment, one measurement resource set includes N measurement resources, for example, including CSI-RS resources or SSB resources; each measurement resource is associated with a TRP, and the UE determines a reporting quantity based on two or more measurement resources. The reporting quantity can be a time domain related parameter, a frequency domain related parameter, a phase related parameter between multiple measurement resource sets. The UE reports one or more of the reporting quantities in one reporting, and the specific parameters included in the reporting quantity are not repeated here.

By taking measurement of a time difference, frequency difference or phase difference between two or more TRPs as an example, each TRP sends a measurement reference signal, and then the UE can determine a time difference between the two TRPs based on reception time of the measurement reference signals sent by the two TRPs; or, determine a frequency difference between the two TRPs based on reception frequencies of the measurement reference signals sent by the two TRPs; or, determine a phase difference between two channels based on the signals sent by the two TRPs.
2) determining one or more reporting quantities according to multiple port corresponding to one measurement resource.

In this embodiment, the UE may use multiple ports of a measurement resource to measure and report the reporting quantity. For example, a multi-port CSI-RS resource may be used to measure and report the time difference, phase difference or frequency difference, where different ports of the CSI-RS resource are associated with different TRPs.
3) determining a reporting quantity according to at least two measurement resources of multiple measurement resource sets.

In this embodiment, the multiple measurement resource sets may be multiple explicit measurement resource sets or multiple implicit measurement resource sets, where each measurement resource set corresponds to a TRP. In case of reporting a reporting quantity, the UE determines one or more reporting quantities based on resources in different measurement resource sets. For example, the network device configures 4 measurement resource sets for the UE, each measurement resource set includes K measurement resources, and then the UE determines one reporting quantity based on the measurement resources in different measurement resource sets.

In the above embodiment, each reporting quantity can be obtained based on multiple pieces of measurement resource related information, that is, each reporting quantity can correspond to multiple pieces of measurement resource related information. For example, the UE determines one reporting quantity based on multiple measurement resources in one measurement resource set; the UE determines one reporting quantity or determines multiple reporting quantities based on multiple port of measurement resources of one measurement resource; the UE determines one reporting quantity based on multiple measurement resources in multiple measurement resource sets. One measurement resource set can be a resource setting (e.g., CSI resource setting) or a resource set (e.g., CSI resource set), and it can also be a measurement resource group composed of some resources in one resource set (e.g., a measurement resource group composed of some CSI-RS resources in one CSI resource set).

After the UE reports the reporting quantity to the network device, the network device may determine specific measurement resource related information corresponding to each reporting quantity.

As an optional embodiment, the determining the reporting quantity according to the multiple measurement resources related information, includes at least one of the following:
Method (a): determining the reporting quantity according to a configuration order or an indication order of multiple pieces of measurement resource related information; or
Method (b): determining the reporting quantity according to indexes or identifiers of multiple pieces of measurement resource related information.

In this embodiment, the UE may measure the reporting quantity based on the configuration order or indication order of the measurement resource related information configured by the network device; or may measure the reporting quantity according to the indexes or identifiers (ID) of the measurement resource related information.

Optionally, for the method (a): determining the reporting quantity according to a configuration order or an indication order of multiple pieces of measurement resource related information, includes at least one of the following:
a1) determining an n-th reporting quantity according to n-th measurement resource related information and reference measurement resource information, where the reference measurement resource information is one of the measurement resource related information.

In this embodiment, the UE may calculate the reporting quantity according to the configuration order or indication order of the measurement resource related information (i.e., the n-th configured measurement resource related information) and the reference measurement resource information.

For example, by taking the measurement resource related information being the measurement resource as an example, the number of reporting quantities is N-1, where N is the number of configured measurement resources. One measurement resource set is configured with N=4 measurement resources, corresponding to 4 TRPs. For time difference reporting, the fourth measurement resource is used as a reference measurement resource, and the time differences between the other three measurement resources and the first measurement resource are reported, that is, N-1 reporting quantities are reported, namely: a first reporting quantity determined based on the first measurement resource and the fourth measurement resource, a second reporting quantity determined based on the second measurement resource and the fourth measurement resource, and a third reporting quantity determined based on the third measurement resource and the fourth measurement resource.

For another example, by taking the measurement resource related information being a port of measurement resource as an example, the UE can determine an n-th reporting quantity based on an n-th configured port of measurement resource and a reference port of measurement resource. By taking the measurement resource related information being a measurement resource set as an example, the UE can determine an n-th reporting quantity based on the n-th configured measurement resource set and the reference measurement resource set.
a2) determining an n-th reporting quantity according to a (n+1)-th measurement resource related information and reference measurement resource information.

This embodiment is similar to the above method of determining a reporting quantity according to n-th measurement resource related information and reference measurement resource information. For example, one measurement resource set is configured with N=4 measurement resources, corresponding to 4 TRPs. For time difference reporting, the first measurement resource is used as a reference measurement resource, and the time differences between the other three measurement resources and the first measurement resource is reported, that is, N-1 reporting quantities are reported, namely: a first reporting quantity determined based on a second measurement resource and the first measurement resource, a second reporting quantity determined based on a third measurement resource and the first measurement resource, and a third reporting quantity determined based on a fourth measurement resource and the first measurement resource.

For another example, by taking the measurement resource related information being a port of measurement resource as an example, the UE can determine an n-th reporting quantity based on a (n+1)-th configured port of measurement resource and a reference port of measurement resource. By taking the measurement resource related information being the measurement resource set as an example, the UE can determine the n-th reporting quantity based on the (n+1)-th configured measurement resource set and the reference measurement resource set.
a3) determining an n-th reporting quantity according to an n-th measurement resource related information and a (n+1)-th measurement resource related information.

For example, a second reporting quantity is determined according to second and third configured measurement resources, and a third reporting quantity is determined according to third and fourth configured measurement resources. In this case, the reference measurement resource information corresponding to each reporting quantity is different.

For another example, by taking the measurement resource related information being a port of measurement resource as an example, the UE can determine an n-th reporting quantity based on an n-th configured port of measurement resource and a (n+1)-th port of measurement resource. By taking the measurement resource related information being a measurement resource set as an example, the UE can determine the n-th reporting quantity based on the n-th configured measurement resource set and the (n+1)-th measurement resource set.
a4) determining an n-th reporting quantity according to the n-th measurement resource related information and the (n-1)-th measurement resource related information.

For example, a first reporting quantity is determined based on the first and 0-th configured measurement resources, a second reporting quantity is determined based on the second and first configured measurement resources, and a third reporting quantity is determined based on the third and second configured measurement resources. In this case, the reference measurement resource information corresponding to each reporting quantity is different.

For another example, by taking the measurement resource related information being a port of measurement resource as an example, the UE can determine an n-th reporting quantity based on an n-th configured port of measurement resource and a (n-1)-th port of measurement resource. By taking the measurement resource related information being the measurement resource set as an example, the UE can determine an n-th reporting quantity based on the n-th configured measurement resource set and the (n-1)-th measurement resource set.
a5) determining an n-th reporting quantity according to a k-th measurement resource related information and a reference measurement resource information; where n and k are greater than or equal to 1, and n and k are different.

In this embodiment, a value of k is determined by the UE, and the UE can report the k-th measurement resource related information and/or reference measurement resource information to the network device. For example, by taking the fourth measurement resource as a reference measurement resource, for the first reporting quantity, the UE determines that k is 3, and then the UE determines the first reporting quantity based on a third measurement resource and the fourth measurement resource; or, for a second reporting quantity, the UE determines that k is 1, and then the UE can determine the second reporting quantity based on the first measurement resource and the fourth measurement resource. That is, the UE can determine the k-th measurement resource corresponding to each reporting quantity by itself, where the k-th measurement resource refers to a k-th measurement resource in a measurement resource set configured by the network side.

The above methods a1) to a5) are examples of determining the reporting quantity according to a configuration order or an indication order of multiple pieces of measurement resource related information, where the order of the measurement resource related information can be configured or indicated. The UE can also determine the reporting quantity according to indexes or identifiers of multiple pieces of measurement resource related information.

Optionally, determining the reporting quantity according to indexes or identifiers of multiple pieces of measurement resource related information includes at least one of the following:
b1) determining an m-th reporting quantity according to measurement resource related information corresponding to a measurement resource information identifier m and reference measurement resource information; where m is greater than or equal to 0.

In this embodiment, since the indexes or identifiers of the measurement resource related information may start from 0, m is greater than or equal to 0. In addition, the indexes or identifiers of the measurement resource related information may be arranged in order from small to large, or there may be no rule in the arrangement, and the indexes or identifiers may also be discontinuous. According to the indexes or identifiers of the measurement resource related information and the reference measurement resource information, the UE may calculate a reporting quantity, which may be different from the reporting quantity determined according to the configuration order.

It is to be noted that the measurement resource information identifier (or index) m in the embodiment of the present disclosure may refer to an m-th identifier (or index) configured by the network device, or may refer to a specific identifier (or index) value. The identifier (or index) may be an ID value actually configured, or may be a relative ID (e.g., a value arranged in ascending order or descending order), which is not limited here.

For example, by taking the measurement resource related information being a measurement resource as an example, the number of reporting quantities is N-1, where N is the number of configured measurement resources. One measurement resource set is configured with N=4 measurement resources, corresponding to 4 TRPs. For time difference reporting, a measurement resource 4 (indicating a measurement resource with an index or identifier of 4) is used as a reference measurement resource, and the time differences between the other three measurement resources and the first measurement resource is reported, that is, N-1 reporting quantities are reported, namely: a first reporting quantity determined according to a measurement resource ID 1 and the measurement resource ID 4, a second reporting quantity determined according to a measurement resource ID 2 and the measurement resource ID 4, and a third reporting quantity determined according to a measurement resource ID 3 and the measurement resource ID 4.

The case where the measurement resource related information is a port of measurement resource or a measurement resource set is similar to the above example where the measurement resource related information is a measurement resource, which will not be described in detail here.
b2) determining an m-th reporting quantity according to measurement resource related information corresponding to a measurement resource information identifier (m+1) and reference measurement resource information.

For example, one measurement resource set is configured with N=4 measurement resources, whose corresponding indexes or identifiers are: 1, 2, 3, 4 (i.e., numbering starting from 1), corresponding to 4 TRPs. For time difference reporting, a measurement resource ID 1 (indicating a measurement resource with an index or identifier of 1) is used as a reference measurement resource, and the time differences between the other three measurement resources and the first measurement resource are reported, that is, N-1 reporting quantities are reported, namely: a first reporting quantity determined according to a measurement resource ID 2 and the measurement resource ID 1, a second reporting quantity determined according to a measurement resource ID 3 and the measurement resource ID 1, and a third reporting quantity determined according to the measurement resource ID 4 and a measurement resource ID 1.

The case where the measurement resource related information is a port of measurement resource or a measurement resource set is similar to the above example where the measurement resource related information is a measurement resource, which will not be described in detail here.
b3) determining an m-th reporting quantity according to measurement resource related information corresponding to a measurement resource information identifier m and measurement resource related information corresponding to a measurement resource information identifier (m+1).

For example, a first reporting quantity is determined according to a measurement resource ID 1 and a measurement resource ID 2, a second reporting quantity is determined according to the measurement resource ID 2 and a measurement resource ID 3, and a third reporting quantity is determined according to the measurement resource ID 3 and a measurement resource ID 4. In this case, the reference measurement resource information corresponding to each reporting quantity is different.
b4) determining an m-th reporting quantity according to measurement resource related information corresponding to a measurement resource information identifier m and measurement resource related information corresponding to a measurement resource information identifier (m-1).

For example, a first reporting quantity is determined according to a measurement resource ID 1 and a measurement resource ID 0, a second reporting quantity is determined according to a measurement resource ID 2 and the measurement resource ID 1, and a third reporting quantity is determined according to a measurement resource ID 3 and the measurement resource ID 2. In this case, the reference measurement resource information corresponding to each reporting quantity is different.
b5) determining an m-th reporting quantity according to measurement resource related information corresponding to a measurement resource information identifier p and reference measurement resource information; where m and p are greater than or equal to 0, and m is different from p.

In this embodiment, the value of p is determined by the UE, and the UE can report the measurement resource related information p and/or the reference measurement resource information to the network device. For example, by taking a measurement resource ID 4 as a reference measurement resource, for a first reporting quantity, the UE determines that p is 3, and then the UE determines the first reporting quantity according to a measurement resource ID 3 and the measurement resource ID 4; or, for a second reporting quantity, the UE determines that p is 1, and then the UE can determine the second reporting quantity according to a measurement resource ID 1 and the measurement resource ID 4. That is, the UE can determine the measurement resource identifier p corresponding to each reporting quantity by itself.
b6) determining the reporting quantity according to an order of indexes or identifiers of multiple pieces of measurement resource related information.

In this embodiment, the UE may also determine an order of reporting quantities according to indexes or identifiers of the measurement resource related information in a descending order or a descending order.

For example, the UE determines the first, second, ..., reporting quantities in order according to the port of measurement resource indexes in ascending order or descending order. Alternatively, the UE may determine an order of reporting quantities according to a predefined rule and indexes of port of measurement resources, for example, the UE reports a reporting quantity determined according to port of measurement resource 2 and port 1, a reporting quantity determined according to port of measurement resource 3 and port 2, a reporting quantity determined according to port of measurement resource 4 and port 3, etc.

As an optional embodiment, the method further includes at least one of the following:
(1) determining the reference measurement resource information according to a predefined rule; for example, determining first configured measurement resource related information as the reference measurement resource information according to the predefined rule, or determining y-th configured measurement resource related information as the reference measurement resource information according to the predefined rule.
(2) determining the reference measurement resource information according to configuration of the network device; for example, the network device configures first measurement resource related information as the reference measurement resource information, or the network device configures the y-th measurement resource related information as the reference measurement resource information.
(3) determining, by the UE, that X-th measurement resource related information in the measurement resource related information is the reference measurement resource information, where X is greater than or equal to 1. In this case, the UE determines the reference measurement resource information by itself. For example, the UE determines the reference measurement resource information based on measurement. In case that the UE determines in the measurement that channel quality corresponding to a third measurement resource is better, such as having a higher layer 1 reference signal received power (L1-RSRP), or layer 1 signal-to-noise and interference ratio (L1-SINR) or CQI value, it can be used as the reference measurement resource information; or, the UE determines that a second measurement resource is received by the UE first and taking the second measurement resource as a reference can ensure that the time difference between all measurement resources is a positive value, then the second measurement resource can be used as a reference.

Optionally, in case that the UE determines that the X-th measurement resource related information in the measurement resource related information is the reference measurement resource information, the UE transmits indication information of the reference measurement resource information to the network device, to notify the network device of the reference measurement resource information.

In this embodiment, a method for determining reference measurement resource information is provided. The reference measurement resource information may be a measurement resource configured by high layer signaling, for example, a network device configuring a second measurement resource as a reference resource, or a first measurement resource as a reference measurement resource. The reference measurement resource may also be determined by the UE based on measurement. For example, in case that the UE determines in the measurement that the channel quality corresponding to a third measurement resource is better, the third measurement resource may be used as a reference measurement resource, and which resource is used as the reference measurement resource is reported in the report. The UE may also determine the reference measurement resource based on a predefined rule, such as pre-agreeing in the protocol that the first or last measurement resource is a reference measurement resource. In addition, there may be multiple reference measurement resources, such as different reference measurement resources corresponding to each reporting quantity.

As an optional embodiment, the indication information of the measurement resource related information includes at least one of the following:
bit information corresponding to indexes or identifiers of measurement resource related information; or
indexes or identifiers of measurement resource related information.

In this embodiment, the UE can report the measurement resource related information corresponding to each reporting quantity in case of transmitting the reporting quantity, so that the network device can determine the measurement resource related information corresponding to each reporting quantity based on the indication information, thereby compensating the transmit signal of each TRP and eliminating the time difference, frequency difference, phase difference or reciprocity error between multiple TRPs.

Specifically, the UE may indicate, by bit mapping, the index or ID of one or more pieces of measurement resource related information corresponding to each reporting quantity. For example, the UE indicates a sequence of measurement resource set IDs by an additional bit. Alternatively, the UE may also directly indicate the index or ID of one or more pieces of measurement resource related information corresponding to the reporting quantity. For example, the sequence of measurement resource set IDs may be used to ensure that all reporting quantities share the same sign, so that the reporting quantity is a non-negative value, or a non-positive value, thereby reducing feedback overhead.

Optionally, the reporting quantity includes: a first reporting quantity part and a second reporting quantity part. The first reporting quantity part corresponds to a first quantization interval, the second reporting quantity part corresponds to a second quantization interval. A quantization range of the reporting quantity corresponding to the first quantization interval is different from a quantization range of the reporting quantity corresponding to the second quantization interval.

In this embodiment, in case of reporting the reporting quantity, the UE can use a two-part quantization method. The first part is used to report an interval range of the reporting quantity, such as [a, b] samples, or [a, b] Hertz. The second part is used to perform further quantized reporting for the interval reported in the first part (such as fine reporting with a smaller granularity), which is suitable for situations where the number of intervals in the first part is large, such as time difference or frequency difference.

Optionally, the UE adopts non-differential reporting in case of reporting each reporting quantity, that is, no differential processing is performed between the reporting quantities, so that the sequence of the reporting quantities can be determined according to the configuration order of the measurement resource related information. In some cases, the reported time domain related parameter (such as time difference), frequency domain related parameter (such as frequency difference), and phase related parameter (such as phase difference) can be directly quantized in case of reporting, such as determining s range of the reporting quantity and quantizing it within the determined range.

In some cases, the range of the reporting quantity varies greatly in different deployment situations or multiple reports, and a two-level quantization method can be considered. For example, the UE reports a quantization range of the reporting quantity, and reports within a determined reporting range. For example, for phase difference reporting, the UE reports that an interval where the phase difference is located is at least one of the following: [0,90), [90,180), [180,270), or [270,360), where [x or y] indicates that s range can contain a value of x or y, and (x or y) indicates that s range does not contain a value of x or y; and the UE continues to perform fine quantization within a feedback range, or the UE reports that an interval where the phase difference is located is at least one of the following: [-180,-90), [-90,0), [0,90), or [90,180), and the UE continues to perform fine quantization within a feedback range.

For another example, for time difference reporting, the time difference is reported to fall within at least one of the following intervals: [0, cyclic prefix (CP) length) or [CP length, +∞). The unit can be the number of samples, which is determined based on a sampling rate and FFT size. For time differences smaller than the CP length, finer quantization can be applied, meaning a smaller granularity of time difference. For time differences larger than the CP length, the quantization precision can be relatively coarser, meaning a larger granularity of time difference. In these examples, the UE reports a first quantization interval or a first value, and, based on a predefined rule (such as predefined quantization ranges and feedback intervals), reports a second quantization interval or a second value within the reported quantization interval or based on the first value.

Through the above method, the UE reports the reporting quantity to the network device, so that the network device can determine the measurement resource related information corresponding to each reporting quantity according to the indication information of the reporting quantity and/or the measurement resource related information corresponding to the reporting quantity. The network device can obtain the time difference, frequency difference or phase difference between any two TRPs, and after pre-compensating the transmit signal, ensure that the signals received by the UE from multiple TRPs are time or frequency synchronized, thereby ensuring the performance of CJT transmission.

The following example illustrates a method for a UE to determine a reporting quantity based on multiple pieces of measurement resource related information.

Example 1: the UE determines a first reporting quantity according to at least two measurement resources in a measurement resource set.

One measurement resource set includes N measurement resources (such as CSI-RS resources or synchronization signal block (SSB) resources), each measurement resource is associated with one TRP, and the UE determines one first reporting quantity based on 2 or more measurement resources. The first reporting quantity can be at least one of the following: one PMI, one phase value/difference, one time value/difference, or one frequency value/difference. The UE reports one or more first reporting quantities in one reporting.

This method is applicable to measurement of the time difference, frequency difference or phase difference between two or more TRPs. For example, each TRP transmits a measurement reference signal, then the UE can determine a time difference between the two TRPs based on reception time of the measurement reference signals transmitted by the two TRPs, or determine a frequency difference between two TRPs based on the measurement reference signals transmitted by the two TRPs and the UE's reception frequency deviation, or determine a phase difference between two channels based on two TRP reception signals.

The UE determines the reporting quantity (quantity, sequence, reporting format, etc.) and a corresponding relationship between the reporting quantity and the measurement resource according to the following options:
Option 1-1: the number of reporting quantities is N-1, where N is the number of configured measurement resources;
Option 1-2: the number of reporting quantities is M, where M is a value configured by high layer signaling, or indicated by the UE, or determined by the UE according to a predefined rule;
Option 1-3: the number of reporting quantities is 1, and the reporting quantity is determined by all measurement resources in the measurement resource set or determined by indicated measurement resource.

Option 1-1 specifically includes:
Option 1-1-1: an n-th reporting quantity is determined according to an n-th or (n+1)-th measurement resource and a reference measurement resource; the method for determining the reference measurement resource is not described in detail here.
Option 1-1-2: an n-th reporting quantity is determined according to an n-th and (n+1)-th measurement resources, or according to an n-th and (n-1)-th measurement resources (equivalent to different reference measurement resources corresponding to each reporting quantity).
Option 1-1-3: an n-th reporting quantity is determined according to a k-th measurement resource and a reference measurement resource, wherein the k-th measurement resource and/or the reference measurement resource is indicated by the UE to the network device.

Optionally, in case of reporting the reporting quantity, the UE can also perform differential reporting on multiple reporting quantities, similar to L1-RSRP reporting, and the multiple reporting quantities can be time domain related parameters, frequency differences or phase related parameters corresponding to different TRPs. For example, by taking the measurement resource corresponding to TRP 4 (e.g., the fourth measurement resource) being the reference measurement resource as an example, a first reporting quantity is the maximum phase difference between multiple TRPs (such as a phase difference between TRP 2 and TRP 4), a second reporting quantity is a phase difference between TRP 1 and TRP 4, and a third reporting quantity is a phase difference between TRP 3 and TRP 4. Thus, in addition to reporting multiple reporting quantities, the UE also needs to indicate the measurement resource corresponding to each reporting quantity, such as reporting the measurement resource associated with each reporting quantity through a Channel State Information Reference Signal Resource Indicator (CRI). In case that the reference measurement resources corresponding to each reporting quantity are different, the UE also needs to report the reference measurement resource corresponding to each reporting quantity. For example, each reporting quantity can correspond to 2 CRIs, which represent a corresponding measurement resource and a reference measurement resource respectively. This differential reporting scheme can use the corresponding reporting method of the above option 1-1-3.

In the above option 1-1-1 to option 1-1-3, the UE determines a sequence of reporting quantities according to a sequence of configured measurement resources. In addition, the sequence of the reporting quantities may also be determined according to a sequence of measurement resource IDs from small to large or from large to small, for example,
Option 1-1-4: an n-th reporting quantity is determined according to a measurement resource corresponding to an n-th measurement resource ID or a measurement resource corresponding to a (n+1)-th measurement resource ID, and a reference measurement resource;
Option 1-1-5: an n-th reporting quantity is determined according to measurement resources corresponding to an n-th and (n+1)-th measurement resource IDs, or according to measurement resources corresponding to an n-th and (n-1)-th measurement resource IDs (equivalent to different reference measurement resources corresponding to each reporting quantity);
Option 1-1-6: an n-th reporting quantity is determined according to a measurement resource corresponding to a k-th measurement resource ID and a reference measurement resource, where the measurement resource corresponding to a p-th measurement resource ID and/or reference measurement resource is indicated by the UE to the network device.

For the option 1-2:
For example, in one reporting, the UE does not need to report time differences between all TRPs, but only selects a few TRPs (measurement resources) for reporting. For example, in reciprocity error reporting, the UE selects multiple TRPs with better channel quality to report the phase difference between TRPs; in time error estimation, the UE reports multiple TRPs with smaller time differences.

Compared with the option 1-1, the UE needs to first report a range of measurement resources corresponding to a first reporting quantity, such as using bit mapping or direct indication to report the range of measurement resources corresponding to the first reporting quantity, and the range is applicable to multiple first reporting quantities; or in case that each first reporting quantity is reported, the corresponding measurement resource or measurement resource range is indicated.

For example, one measurement resource set includes 8 measurement resources. The UE uses 8 bits to indicate the range of measurement resources corresponding to the reporting quantity by bit mapping. In case that the bit corresponding to the measurement resource is 1, it indicates that the first reporting quantity is further reported, and in case that it is 0, it indicates that it is irrelevant to the reporting of the first reporting quantity. The UE indicates that the first reporting quantity is associated with 4 measurement resources. Then, the solution in the option 1-1 is used in the indicated measurement resource. At this time, the specific solution is:
Option 1-2-1: an n-th reporting quantity is determined according to an n-th or (n+1)-th indicated measurement resource and a reference measurement resource; the method for determining the reference measurement resource is not described in detail here.
Option 1-2-2: an n-th reporting quantity is determined according to an n-th and (n+1)-th indicated measurement resources, or according to an n-th and (n-1)-th measurement resources (equivalent to different reference measurement resources corresponding to each reporting quantity).
Option 1-2-3: an n-th reporting quantity is determined according to a k-th indicated measurement resource and a reference measurement resource, where the k-th indicated measurement resource and/or the reference measurement resource is indicated by the UE to the network device.

In the option 1-2 of this method, a TRP selection process is included. The UE can report a measurement value with a relatively small time difference, frequency difference or phase difference, or select measurement resources with better channel quality to report the reporting quantity. Correspondingly, the network device can also use a better TRP to perform transmission for the UE.

For the option 1-3:
For example, in reciprocity error reporting, the UE feeds back the phase difference between multiple TRPs based on a precoding codebook, such as using a 2-antenna codebook to reflect the phase difference between 2 TRPs, or using a 4-antenna codebook to reflect the phase difference between 4 TRPs, using an 8-antenna codebook to reflect the phase difference between 8 TRPs, etc. In this case, the network device can configure N=2, 4 or 8 measurement resources in a measurement resource set, and the UE determines a precoding codeword based on the channel information corresponding to all configured measurement resources, and feeds back an index corresponding to the precoding codeword to the network device.

For another example, the network device configures a number of TRPs greater than the precoding codebook dimension in a measurement resource set, and the UE selects several TRPs (measurement resources) from them for reporting, and reports corresponding precoding codeword indexes based on the selected measurement resources. In this case, the antenna dimension corresponding to the precoding codeword (such as 2, 4, or 8 antenna ports, etc.) is determined by the number of measurement resources indicated by the UE.

In the measurement report, the UE combines channels corresponding to all measurement resources or all indicated measurement resources into an equivalent channel to determine a precoding codeword index. In the equivalent combined channel, different channel orders correspond to different precoding codeword indexes. For example, there are 8 measurement resources in total, and each measurement resource is a 1-port CSI-RS; assuming that the UE uses 1 receiving antenna for measurement, the combined equivalent channel is a 1*8 channel. In order to reduce the UE reporting overhead, the UE determines the equivalent channel according to the order of the configured measurement resources or the order of the indicated measurement resources, and then determines the corresponding precoding codeword. After the network device receives the precoding codeword reported by the UE, the network device also determines the phase difference between the measurement resources or TRP based on the same order.

In the option 1-3 of this method, multiple measurement resources are used for measurement, each measurement resource is associated with a TRP, and the existing QCL configuration indication method can be used to configure QCL parameters for each measurement resource.

Example 2: the UE determines one or more first reporting quantities based on a measurement resource.

The UE can use a multi-port measurement resource to measure and report the time difference, phase difference or frequency difference, where different ports of the measurement resource are associated with different TRPs.

The UE determines the reporting quantity (quantity, order, reporting format, etc.) and a corresponding relationship between the reporting quantity and the measurement resource or port of measurement resource according to the following method:
Option 2-1: the UE determines one first reporting quantity according to one measurement resource.
Option 2-2: the UE determines multiple first reporting quantities according to one measurement resource.

Specifically, for the option 2-1: one measurement resource set includes multiple measurement resources, and the UE reports a PMI or a phase value/difference or a time value/difference or a frequency value/difference according to each measurement resource, and reports a total of multiple PMIs (or phase values/differences or time values/differences or frequency values/differences), where each measurement resource is jointly issued by 2 TRPs or TRP groups, such as different ports corresponding to different TRPs, and the order of first reporting quantities or the association relationship between the first reporting quantity and the measurement resource is determined according to at least one of the following methods:
Option 2-1-1: determining an order of reporting quantities according to a configuration order or indication order of the measurement resources.

In this method, in case that a measurement resource set is configured with N measurement resources, an n-th reporting quantity is determined based on an n-th measurement resource. In case that performing time difference measurement and the n-th measurement resource is configured with 2 ports, the UE determines a time difference based on the 2 ports of the measurement resource and reports it; in case that performing phase difference measurement and the n-th measurement resource is configured with 2 ports, the UE determines the phase difference based on the 2 ports of the measurement resource and reports it. This method is applicable to measuring the time difference, frequency difference and phase difference between two TRPs, and the UE does not need to jointly determine a reporting quantity based on multiple measurement resources.

In case that the number of configured measurement resources is large, the UE may also report measurement resources (i.e., the selected TRP pair) corresponding to the reporting quantities. At this point, the UE determines an order of reporting quantities according to an order of indicated measurement resources. For example, in case that N measurement resources are configured, N bits are used to indicate a range of measurement resources corresponding to the reporting quantities by bit mapping.

Option 2-1-2: determining an order of reporting quantities according to IDs of configured or indicated CSI-RS resources from small to large.

This method is applicable to using one measurement resource to measure and report the time difference, frequency difference or phase difference between two TRPs. In case that there are multiple TRPs, every two TRPs correspond to one measurement resource, and the measurement and reporting are performed separately. In case that one measurement resource set is configured with N measurement resources, an n-th reporting quantity is determined according to a measurement resource with an n-th ID value (arranged from small to large, or from large to small according to the measurement resource IDs).

In case of selecting TRP, UE reports a TRP pair, that is, whether two TRPs correspond to corresponding reporting quantities. At this point, the n-th reporting quantity is determined according to a measurement resource with an n-th ID value in the indicated measurement resource (arranged from small to large or from large to small according to the measurement resource IDs).

Option 2-1-3: determining an order of reporting quantities according to index values or numerical values of first reported quantities, from large to small or from small to large.

In this method, it is assumed that one measurement resource set is configured with N measurement resources, and the UE calculates a time difference, frequency difference or phase difference according to each measurement resource, and the UE performs reporting in order of values of the reporting quantiles from large to small or from small to large.

Optionally, the reporting may be performed in a differential form, for example, the maximum measurement value is quantized by using more bits, and the minimum measurement value is quantized by using fewer bits (i.e., a difference between the minimum measurement value and the maximum measurement value is reported).

Optionally, in this method, it is also necessary to additionally indicate an association between each reporting quantity and the measurement resource or TRP, for example, reporting a measurement resource corresponding to each reporting quantity through CRI.

### For the option 2-2:

The UE uses multiple ports of one measurement resource (such as a CSI-RS resource) to measure and report the time difference, frequency difference or phase difference between multiple TRPs. For example, the CSI-RS resource has 4 ports, which are transmitted by 4 TRPs respectively. The UE can determine a reporting quantity between multiple TRP pairs according to a measurement resource. A reporting order of reporting quantities corresponding to one measurement resource can be:

Option 2-2-1: determining an order of reporting quantities according to an order of port of measurement resource indexes, such as an order from small to large or the order from large to small according to the port of measurement resource indexes. For example, a port 0 of 4 CSI-RS ports is a reference port, and the following are reported in the order from small to large according to the port indexes: a reporting quantity calculated according to a port 1 and the reference port 0, a reporting quantity calculated according to a port 2 and the reference port 0, and a reporting quantity calculated according to a port 3 and the reference port 0. By taking the measurement resource having 4 ports as an example, according to a predefined rule, the UE reports the following reporting quantities corresponding to one measurement resource respectively: a reporting quantity determined according to a port 1 and a port 0, a reporting quantity determined according to a port 2 and the port 1, and a reporting quantity determined according to a port 3 and the port 2.

Option 2-2-2: arranging the reporting quantities in ascending order or in descending order according to their values or indexes. For example, in case that three phase differences of 45 degrees, 56 degrees, and 90 degrees are determined according to one measurement resource, it is also necessary to report a port of the measurement resource from which each reporting quantity is obtained. For example, the three reporting quantities correspond to a port 2, a port 3, and a port 1, respectively, that is, a first phase difference is obtained based on the port 2 and a reference port, a second phase difference is obtained based on the port 3 and the reference port, and a third phase difference is obtained based on the port 1 and the reference port.

Optionally, the UE may also only report a reporting quantity that meets a specific condition and/or a port of measurement resource corresponding to the reporting quantity in a measurement resource. For example, the UE only reports the reporting quantity with a phase difference less than a specific value, which is equivalent to performing TRP selection. This does not require the network device to use all TRPs to serve the UE, but only uses TRPs with relatively better performance to serve the UE. In this case, even if the network device does not perform pre-compensation, the phase difference between the selected TRPs remains small.

Option 2-2-3: the UE indicates a port of measurement resource index corresponding to the reporting quantity in the report. The UE can indicate the port index by bit mapping or direct indication, which will not be repeated here.

Example 3: determining one first reporting quantity according to multiple measurement resource sets.

In this embodiment, the multiple measurement resource sets may be multiple explicit measurement resource sets or multiple implicit measurement resource sets, where each measurement resource set corresponds to one TRP. In case of reporting, the UE determines one or more reporting quantities based on resources in different measurement resource sets. For example, the network device configures 4 measurement resource sets for the UE, each measurement resource set includes K measurement resources, and the UE determines a first reporting quantity based on the measurement resources in different measurement resource sets.

The UE may determine an order of reporting quantities and/or measurement resource sets corresponding to the reporting quantities according to at least one of the following options:
Option 3-1: the UE determines the order of reporting quantities and/or measurement resource sets corresponding to the reporting quantities according to a predefined rule; or
Option 3-2: the UE indicates measurement resource set IDs corresponding to the reporting quantities in the report.

Specifically, the option 3-1 may include:
Option 3-1-1: an n-th reporting quantity is determined according to an n-th or (n+1)-th measurement resource set and a reference measurement resource set;
Option 3-1-2: an n-th reporting quantity is determined according to n-th and (n+1)-th measurement resource sets, or according to the n-th and (n-1)-th measurement resource sets.

In case that one measurement resource set includes one or more measurement resources, the UE can select one measurement resource from multiple measurement resource sets to measure the first reporting quantity. For example, the UE selects a measurement resource with better channel quality to calculate the reporting quantity, so that the calculation of the reporting quantity is relatively accurate; alternatively, one measurement resource set includes only one measurement resource, and the UE calculates the time difference, frequency difference or phase difference between different TRPs through one measurement resource in each measurement resource set.

For the option 3-2:
Multiple first reporting quantities can be reported in a differential or non-differential manner. The UE can report a measurement resource set ID corresponding to each first reporting quantity. The measurement resource set ID can be an explicit measurement resource set ID. For example, the network device configures 4 measurement resource set IDs for the UE, and a first reporting quantity is determined according to a second (such as ID 1) and fourth (such as ID 3) measurement resource sets. Then, the UE can indicate that the measurement resource set IDs are 1 and 3, which specifically, can be indicated by bit mapping, such as using 4 bits (corresponding to 4 measurement resource sets respectively) to indicate the measurement resource set IDs. The i-th bit is 0, it indicates that the reporting quantity is not determined according to the i-th measurement resource set; and the j-th bit is 1, it indicates that the reporting quantity is determined according to the j-th measurement resource set.

By taking time difference reporting as an example, in case of using the bit mapping method, the UE indicates that the reporting quantity corresponds to the first and second measurement resource sets. According to the UE's indication, the network device cannot determine whether the reporting quantity is a time difference of the first measurement resource set relative to the second measurement resource set, or a time difference of the second measurement resource set relative to the first measurement resource set. Thus, it is necessary to additionally indicate a relative relationship of multiple measurement resource sets corresponding to the reporting quantity. For example, in case of using additional T bits for indication, such as in case of T=1, in case that the bit is 0, it indicates that the reporting quantity is determined according to a measurement resource set with a smaller ID and a measurement resource set with a larger ID, for example, a time difference, frequency difference, or phase difference of measurement resources in the measurement resource set with a smaller ID relative to the measurement resources in the measurement resource set with a larger ID (the measurement resource set with a larger ID is the reference measurement resource set). In case that the bit is 1, it indicates that the reporting quantity is determined according to a measurement resource set with a larger ID and a measurement resource set with a smaller ID, for example, a time difference, frequency difference, or phase difference of measurement resources in the measurement resource set with a larger ID relative to measurement resources in the measurement resource set with a smaller ID. In this method, the reporting quantity can be only positive values, or only negative values, thereby reducing reporting overhead.

The sign of the reporting quantity can also be indicated by the additional T bit. For example, in case that the reporting quantity is -0.05ms, or -5 sample points, it means that the time difference between the measurement resources in the measurement resource set with a larger ID and the measurement resources in the measurement resource set with a smaller ID is a negative value. In this case, only 0.05ms or 5 sample points can be reported, and the T bit is used to indicate that the value corresponds to a time difference between measurement resources in the measurement resource set with a smaller ID and measurement resources in the measurement resource set with a larger ID.

The UE can also directly indicate ID of the measurement resource set. For example, in case that the network device configures 4 measurement resource sets, the UE uses 2 bits to represent the ID of each measurement resource set. In this embodiment, the measurement resource set ID can be a relative ID, that is, a relative ID between all measurement resource sets corresponding to a reporting setting. For example, in case that a phase difference between a third (measurement resource set ID is 2, i.e., "10") TRP and a first (measurement resource set ID is 0, i.e., "00") TRP is 50 degrees, the UE can indicate that the reporting quantity is 50 degrees, and the corresponding measurement resource set is 0010, and the measurement resource set ID in front is a reference measurement resource set. For another example, in case that a phase difference between the third TRP and the first TRP is -50 degrees, the UE can indicate that the reporting quantity is 50 degrees, and the corresponding measurement resource set is 1000, which is equivalent to that in case that the phase difference between the first TRP and the third TRP is 50 degrees, the sign of the reporting quantity is reflected in the order of the measurement resource sets.

In implicit measurement resource grouping, the measurement resource ID can also be an implicit group ID, such as high layer parameters corresponding to each group. The measurement resources in different measurement resource sets can also correspond to a CRI value. In case that the UE reports the CRI value, it indicates that the reporting quantity is determined by the measurement resources corresponding to the CRI value.

In all embodiments of the present disclosure, the number of reporting quantities refers to the number of reports for the wideband or for each subband. In case that the network device configures the UE to report for multiple subbands, each subband may report one or more reporting quantities.

In one embodiment of the present disclosure, the UE determines a reporting quantity according to multiple pieces of measurement resource related information, and reports the reporting quantity to the network device. The UE may also transmit indication information of multiple pieces of measurement resource related information corresponding to the reporting quantity to the network device, so that the network device can compensate for the transmit signal of the TRP based on the reporting quantity and the measurement resource related information corresponding to the reporting quantity, thereby eliminating parameter differences between the TRPs, synchronizing the signal parameters between the multiple TRPs received by the UE, and ensuring the transmission performance of the CJT.

The present disclosure further provides a measurement reporting method, which is applied to a UE, including:
Step a: determining configuration parameters corresponding to measurement resource related information;
Step b: receiving the measurement resource related information according to the configuration parameters.

The measurement resource related information includes at least one of the following: measurement resource; port of measurement resource; or measurement resource set.

In this embodiment, the UE can determine the configuration parameters corresponding to the measurement resource related information, and use the corresponding configuration parameters to receive the measurement resource related information. The configuration parameters are, for example, TCI state, QCL parameters, beam index or other time domain, frequency domain or spatial domain transmission parameters. By taking the measurement resource related information being the port of measurement resource as an example, the UE can determine the TCI state or QCL parameter corresponding to each port of measurement resource, so as to receive the measurement resource according to the corresponding TCI state or QCL parameter, so that the UE receives the correct measurement resource, thereby accurately measuring the reporting quantity.

Optionally, the determining a configuration parameter corresponding to the measurement resource related information, includes:
determining the configuration parameter corresponding to the measurement resource related information according to a first rule;
   or,
determining the configuration parameter corresponding to measurement resource related information according to configuration information of the network device;
The configuration parameter includes transmission configuration indication TCI state and/or quasi co-location QCL parameter.

In this embodiment, each measurement resource related information may be transmitted by multiple TRPs, thus each measurement resource related information may correspond to different configuration parameters. The UE can determine the configuration parameter corresponding to the measurement resource related information based on the first rule, and the first rule is a predefined rule. The UE and the network device both determine the configuration parameter of the measurement resource related information based on the same first rule. For example, the network device configures multiple TCI states and/or QCL parameters for each measurement resource, and the UE determines, according to the first rule, which TCI state and/or QCL parameter among the multiple TCI states and/or QCL parameters configured on the network side, corresponds to each port of measurement resource index.

Optionally, the first rule includes at least one of the following:
one measurement resource related information corresponds to one configuration parameter; for example, one port of measurement resource corresponds to one TCI state or QCL parameter;
one measurement resource related information group corresponds to one configuration parameter; for example, one port of measurement resource group corresponds to one TCI state or QCL parameter; or
a measurement resource related information group corresponding to a code division multiplexing (CDM) group corresponds to one configuration parameter. For example, a port of measurement resource (or port group) corresponding to a CDM group corresponds to one TCI state or QCL parameter.

Optionally, the receiving the measurement resource related information according to the configuration parameter, includes at least one of the following:
determining a reference configuration parameter in the configuration parameter, and receiving a measurement resource by using the reference configuration parameter;
determining a first configuration parameter according to the configuration parameter and a reporting quantity configured by the network device, and receiving a measurement resource by using the first configuration parameter; or
receiving a measurement resource based on a configuration parameter type included in the configuration parameter.

Optionally, determining the reference configuration parameter in the configuration parameter, includes at least one of the following:
(1) determining the reference configuration parameter according to a predefined rule;
   The UE and the network device both determine the reference configuration parameter based on the same predefined rule. The predefined rule is, for example, that: the UE determines that a first configuration parameter configured on the network side is the reference configuration parameter, a last configuration parameter configured on the network side is the reference configuration parameter, and an x-th configuration parameter configured on the network side is the reference configuration parameter. By taking the configuration parameter being a TCI state or QCL parameter as an example, the first TCI state or QCL parameter configured on the network side is predefined as a reference TCI state or QCL parameter, and the UE uses the reference TCI state or QCL parameter (such as Doppler shift) to receive measurement resources. This embodiment can be applied to measurement of time domain related parameter, frequency domain related parameter, or phase related parameter. For another example, the UE determines a QCL parameter with a smallest parameter value as the reference QCL parameter. In case that the network side configures 4 'type A' QCL parameters, and the 4 'type A' parameters have different delay spread values, or have different average delay values, or have different Doppler frequency shift values, or have different Doppler spread values, then the UE determines the QCL parameter with the smallest delay spread value, or the smallest average delay value, or the smallest Doppler frequency shift value or the smallest Doppler spread value among the 4 QCL parameters as the reference configuration parameter.
(2) determining the reference configuration parameter according to an indication of the network device.
   In this embodiment, the network device may configure or indicate which configuration parameter is used as the reference configuration parameter. For example, in a measurement report, the network device configures or indicates the UE to use a third TCI state or QCL parameter configured for the measurement resource as the reference TCI state or QCL parameter to receive the CSI-RS resource.
(3) the UE determines that an N-th configuration parameter in the configuration parameters is the reference configuration parameter, where N is greater than or equal to 1.
   In this embodiment, the reference configuration parameter is determined by the UE itself. The UE can determine that an N-th configuration parameter is the reference configuration parameter. For example, the UE determines a first configuration parameter as the reference configuration parameter and the last configuration parameter as the reference configuration parameter. The UE can also determine a specific reference configuration parameter based on measurement. For example, in case of performing time difference measurement, in case that the UE determines that a reception timing of a third configuration parameter (corresponding to a third TRP) is the same as a current downlink reception timing (e.g., the current downlink timing uses the reception timing of the third TRP), then the UE determines to take the third configuration parameter as the reference configuration parameter. For another example, in case of reporting time difference or frequency difference, in case that the UE determines the reporting quantity based on four configuration parameters, in case that the fourth configuration parameter is used as a reference, it can be ensured that all reporting quantities are positive or negative. For example, a port of measurement resource corresponding to the fourth configuration parameter is first received by the UE or has the lowest reception frequency, and taking the fourth configuration parameter as a reference can reduce the feedback overhead. In this case, the reference configuration parameter is not only used for the UE to receive the measurement resource, but also used to determine the order of the reporting quantity, that is, the UE determines the reporting quantity according to the reference configuration parameter.

Optionally, the determining a first configuration parameter according to the configuration parameter and a reporting quantity configured by the network device, includes at least one of the following:
(1) in case that the reporting quantity configured by the network device is a first reporting type, determining that the first configuration parameter is a reference configuration parameter in the configuration parameter.

In this embodiment, the first reporting type may be: time domain related parameter, frequency domain related parameter, phase related parameter. In case that the reporting quantity is the first reporting type, partial TCI states or partial QCL parameters are used to receive measurement resources. Specifically, the N-th TCI state or QCL parameter is used as a reference TCI state or QCL parameter for reception and measurement; or, the TCI state or QCL parameter configured or indicated by the network device is used as a reference TCI state or QCL parameter for reception and measurement; or, the UE determines which TCI state or QCL parameter is used as a reference TCI state or QCL parameter for reception and measurement.
(b2) in case that the reporting quantity configured by the network device is not the first reporting type, determining that the first configuration parameter is all configuration parameters configured by the network device.

In this embodiment, in case that the reporting quantity configured by the network device is not the first reporting type, all configured configuration parameters are used to receive measurement resources. For example, in case that the reporting quantity configured by the network device is not the first reporting type, all configured TCI states or QCL parameters are used to receive measurement resources.

Optionally, the UE may also determine a second configuration parameter according to a precoding codebook configured by the network device, and use the second configuration parameter to receive the measurement resource.

Optionally, the determining a second configuration parameter according to a precoding codebook configured by the network device, includes at least one of the following:
(3) in case that the precoding codebook configured by the network device is a first type, determining that the second configuration parameter is a reference configuration parameter in the configuration parameters.

In this embodiment, the first type may be a precoding codebook representing time domain related parameters, a precoding codebook representing frequency domain related parameters, or a precoding codebook representing phase related parameters. In this case, partial TCI states or partial QCL parameters are used to receive measurement resources, and the specific method is not repeated here.

(4) in case that the precoding codebook configured by the network device is not the first type, determining that the first configuration parameter includes all configuration parameters configured by the network device.

In this embodiment, in case that the precoding codebook configured by the network device is not the first type, all configured parameters are used to receive the measurement resources. For example, in case that the precoding codebook configured by the network device is not the first type, all configured TCI states or QCL parameters are used to receive the measurement resources.

Optionally, the receiving a measurement resource based on a configuration parameter type included in the configuration parameter, includes:
in case that the configuration parameter includes a spatial parameter, using different spatial parameters for each measurement resource related information to receive the measurement resource; or,
in case that the configuration parameter includes a time domain parameter or frequency domain parameter, using the same time domain parameter or the same frequency domain parameter for each measurement resource related information to receive the measurement resource; or,
for one measurement resource, the UE receives the measurement resource according to a configuration parameter type configured by the network device; where the network device configures at most one time domain parameter or at most one frequency domain parameter, and/or configures one or more spatial domain parameters for one measurement resource.

In this embodiment, the configuration parameter type may include: type A, type B, type C, type D. The spatial domain parameter is, for example, type D; the time domain parameter is, for example, type A or type B; the frequency domain parameter is, for example, type A, type B, type C. The UE may receive the measurement resource based on the configuration parameter type. Each port of measurement resource uses a different spatial domain parameter to receive the measurement resource; multiple port of measurement resources may use the same time domain parameter or frequency domain parameter to receive the measurement resource. Alternatively, the UE may determine that the network device will configure at most one time domain parameter or at most one frequency domain parameter for a measurement resource, and/or configure one or more spatial domain parameters, then the UE may receive the measurement resource according to the configuration parameter type configured by the network device.

In this embodiment, the UE determines a configuration parameter corresponding to each measurement resource or port of measurement resource or measurement resource set, and receives the measurement resource based on the configuration parameter. In case that multiple port of measurement resources are included and correspond to multiple TRPs, the UE can also accurately determine parameters corresponding to each port of measurement resource, thereby using the corresponding parameters to receive the measurement resources and ensuring the accuracy of the measurement.

As shown in FIG. 2, one embodiment of the present disclosure further provides a measurement reporting method, which is applied to a network device, including:
Step 201: receiving, by the network device, a reporting quantity transmitted by a user equipment (UE), or receiving a reporting quantity and indication information of multiple pieces of measurement resource related information corresponding to the reporting quantity, transmitted by the UE.

The reporting quantity includes at least one of the following:
time domain related parameter; where the time domain related parameter may be a time domain related parameter between the multiple pieces of measurement resource related information;
frequency domain related parameter; where the frequency domain related parameter may be a frequency domain related parameter between the multiple pieces of measurement resource related information; or
phase related parameter; where the phase related parameter may be a phase related parameter between the multiple pieces of measurement resource related information.

In this embodiment, the UE transmits a reporting quantity to the network device, or the UE transmits, to the network device, a reporting quantity and indication information of multiple pieces of measurement resource related information corresponding to the reporting quantity. The measurement resource related information includes at least one of the following: measurement resource, port of measurement resource, or measurement resource sets. The measurement resource includes, for example, CSI-RS resource, synchronization signal block (SSB) resource, phase-tracking reference signal (TRS) resources. The port of measurement resource includes, for example, a port corresponding to CSI-RS resource, a port corresponding to SSB resource, a port corresponding to TRS resources. The measurement resource set includes, for example, CSI-RS resource set, SSB resource set. The measurement resource can also be resources of other reference signals, which are not limited here.

The reporting quantity may be a time domain related parameter, a frequency domain related parameter, a phase related parameter, etc. between the multiple measurement resource sets. The time domain related parameter includes, for example, time difference, time difference between multiple measurement resource sets, time difference between multiple measurement resources, and time difference between multiple port of measurement resources. The time domain related parameter may also be a delay difference, time correlation, time correlation factor, delay spread, delay power spectrum density, etc. The time domain related parameter may also be Doppler spread, Doppler frequency shift, etc. Although Doppler spread and Doppler frequency shift are parameters that characterize frequency, they can also be used to characterize time domain related parameters because the time and frequency domains can be correlated and converted. The time domain related parameter may also be one or more precoding matrices or precoding codewords in the codebook representing the time domain parameters. The time domain related parameter between multiple pieces of measurement resource related information refers to a time domain related parameter determined by the UE based on multiple pieces of measurement resource related information.

The frequency domain related parameter includes, for example, frequency difference, frequency difference between multiple measurement resource sets, frequency difference between multiple measurement resources, and frequency difference between multiple port of measurement resources. The frequency domain related parameter can also be frequency deviation, frequency power spectrum density, Doppler shift, Doppler spread, frequency correlation, and frequency correlation factor. The frequency domain related parameter can also be delay spread and time correlation. Although delay spread and time correlation are parameters that characterize time, they can also be used to characterize frequency domain related parameters because the time-frequency domain can be correlated and converted. The frequency domain related parameter can also be one or more precoding matrices or precoding codewords in the code book representing the frequency domain parameters. The frequency domain related parameter between multiple pieces of measurement resource related information refers to a frequency domain related parameter determined by the UE based on multiple pieces of measurement resource related information.

The phase-related parameter includes, for example, phase difference, such as phase difference caused by time asynchrony, frequency asynchrony or lack of reciprocity, phase difference between multiple measurement resource sets, phase difference between multiple measurement resources, and phase difference between multiple port of measurement resources. The phase-related parameter may also be one or more precoding matrices or precoding codewords in a codebook representing phase parameters. The frequency domain-related parameter between multiple pieces of measurement resource related information refers to a phase-related parameter determined by the UE based on multiple pieces of measurement resource related information.

The UE may determine one reporting quantity based on multiple pieces of measurement resource related information, for example, the UE determines one time difference based on two measurement resources, the UE determines one frequency difference based on two measurement resources, and the UE determines one phase difference based on two measurement resources.

In case of reporting the reporting quantity to the network device, the UE can also report indication information of multiple pieces of measurement resource related information corresponding to the reporting quantity. After the network device receives the reporting quantity and the indication information, the network device can determine specific measurement resource related information corresponding to each reporting quantity, and then compensate a transmit signal based on the reporting quantity to eliminate transmission parameter error between the TRPs corresponding to each measurement resource related information.

Optionally, in case that the network device does not received the indication information of multiple pieces of measurement resource related information corresponding to the reporting quantity, the network device can determine measurement resource related information corresponding to the reporting quantity based on predefined rules, or the network device can determine measurement resource related information corresponding to the reporting quantity based on an order of reporting quantities.

In the embodiment of the present disclosure, the network device receives the reporting quantity reported by the UE, or receives the reporting quantity and indication information of multiple pieces of measurement resource related information corresponding to the reporting quantity reported by the UE. The transmit signal of the TRP can be compensated based on the reporting quantity and the indication information of multiple pieces of measurement resource related information corresponding to the reporting quantity, thereby eliminating the parameter differences between the TRPs, synchronizing signals between the multiple TRPs received by the UE, and ensuring the transmission performance of the CJT.

Optionally, the method further includes:
transmitting a configuration parameter corresponding to the measurement resource related information to the UE;
transmitting a measurement resource to the UE.

In this embodiment, the network device configures the configuration parameter of the measurement resource related information for the UE. The UE can use the corresponding configuration parameter to receive the measurement resource related information. The configuration parameter includes, for example, TCI state, QCL parameter, beam index, or other time domain, frequency domain or spatial domain transmission parameters. By taking the measurement resource related information being the port of measurement resource as an example, the UE can determine the TCI state or QCL parameter corresponding to each port of measurement resource, so as to receive the measurement resource according to the corresponding TCI state or QCL parameter, so that the UE receives the correct measurement resource, thereby accurately measuring the reporting quantity.

The measurement resource related information and the configuration parameter satisfy a first rule, where the first rule includes at least one of the following:
one measurement resource related information corresponds to one configuration parameter;
one measurement resource related information group corresponds to one configuration parameter; or
a measurement resource related information group corresponding to a code division multiplexing (CDM) group corresponds to one configuration parameter.

In this embodiment, each measurement resource may be transmitted by multiple TRPs, thus each measurement resource related information may correspond to different configuration parameters. The UE and the network device can determine the configuration parameter corresponding to the measurement resource related information based on the first rule, and the first rule is a predefined rule. The UE and the network device both determine the configuration parameter of the measurement resource related information based on the same first rule. For example, determining, according to the first rule, TCI state and/or QCL parameter corresponding to each port of measurement resource index.

As an optional embodiment, the method further includes: determining measurement resource related information corresponding to the reporting quantity.

Optionally, the determining measurement resource related information corresponding to the reporting quantity includes at least one of the following:
(1) determining the measurement resource related information corresponding to the reporting quantity according to an order of the reporting quantities and a configuration order or an indication order of the measurement resource related information;
(2) determining the measurement resource related information corresponding to the reporting quantity according to an order of the reporting quantities and indexes or identifiers of multiple pieces of measurement resource related information;
(3) determining the measurement resource related information corresponding to the reporting quantity according to according to a second rule; or
(4) determining the measurement resource related information corresponding to the reporting quantity according to indication information of the measurement resource related information included in the measurement information.

Optionally, for the above method (1), the determining the measurement resource related information corresponding to the reporting quantity according to an order of the reporting quantities and a configuration order or an indication order of the measurement resource related information, includes at least one of the following:
(11) determining that measurement resource related information corresponding to an n-th reporting quantity is: n-th measurement resource related information and reference measurement resource information; where the reference measurement resource information is one of the measurement resource related information.

For example, by taking the measurement resource related information being the measurement resource as an example, the number of reporting quantities is N-1, where N is the number of configured measurement resources. One measurement resource set is configured with N=4 measurement resources, corresponding to 4 TRPs. For time difference reporting, the fourth measurement resource is used as a reference measurement resource, and the time differences between the other three measurement resources and the first measurement resource are reported, that is, N-1 reporting quantities are reported, namely: a first reporting quantity determined based on the first measurement resource and the fourth measurement resource, enabling the network device to determine that the measurement resources corresponding to the first reporting quantity include the first and fourth measurement resources; a second reporting quantity determined by the UE based on the second measurement resource and the fourth measurement resource, enabling the network device to determine that the measurement resources corresponding to the second reporting quantity include the second and fourth measurement resources; and a third reporting quantity determined by the UE based on the third measurement resource and the fourth measurement resource, enabling the network device to determine that the measurement resources corresponding to the third reporting quantity are the third and fourth measurement resources.

(12) determining that measurement resource related information corresponding to an n-th reporting quantity is: (n+1)-th measurement resource related information and reference measurement resource information.

For example, one measurement resource set is configured with N=4 measurement resources, corresponding to 4 TRPs. For time difference reporting, the first measurement resource is used as a reference measurement resource, and the time differences between the other three measurement resources and the first measurement resource is reported, that is, N-1 reporting quantities are reported, namely: a first reporting quantity determined by the UE based on a second measurement resource and the first measurement resource, enabling the network device to determine that the measurement resources corresponding to the first reporting quantity include the second and first measurement resources; a second reporting quantity determined by the UE based on a third measurement resource and the first measurement resource, enabling the network device to determine that the measurement resources corresponding to the second reporting quantity include the third and first measurement resources; and a third reporting quantity determined by the UE based on a fourth measurement resource and the first measurement resource, enabling the network device to determine that the measurement resources corresponding to the third reporting quantity includes the fourth and first measurement resources.

(13) determining that measurement resource related information corresponding to an n-th reporting quantity is: n-th measurement resource related information and (n+1)-th measurement resource related information.

For example, the UE determines a second reporting quantity according to second and third configured measurement resources, then the network device can determine that the measurement resource corresponding to the second reporting quantity includes the second measurement resources and the third measurement resources; the UE determines a third reporting quantity according to third and fourth configured measurement resources, then the network device can determine that the measurement resources corresponding to the third reporting quantity includes the third measurement resources and the fourth measurement resources.

(14) determining that the measurement resource related information corresponding to an n-th reporting quantity is: n-th measurement resource related information and (n-1)-th measurement resource related information.

For example, a first reporting quantity is determined based on the first and 0-th configured measurement resources, a second reporting quantity is determined based on the second and first configured measurement resources, then the network device can determine that the measurement resources corresponding to the second reporting quantity include the second measurement resource and the first measurement resource.

(15) determining that the measurement resource related information corresponding to an n-th reporting quantity is: k-th measurement resource related information and reference measurement resource information; where n, k are greater than or equal to 1, and n and k are different.

In this embodiment, a value of k is determined by the UE, and the UE can report the k-th measurement resource related information and/or reference measurement resource information to the network device. The k-th measurement resource refers to a k-th measurement resource in a measurement resource set configured on the network side. For example, by taking the fourth measurement resource as a reference measurement resource, for the first reporting quantity, the UE determines that k is 3, and then the UE determines the first reporting quantity according to a third measurement resource and the fourth measurement resource, and the network device can determine that the measurement resources corresponding to the first reporting quantity include the third measurement resource and the fourth measurement resource.

As an optional embodiment, for the above method (2), the determining the measurement resource related information corresponding to the reporting quantity according to an order of the reporting quantities and indexes or identifiers of multiple pieces of measurement resource related information, includes at least one of the following:
(21) determining that measurement resource related information corresponding to an m-th reporting quantity includes: measurement resource related information corresponding to a measurement resource information identifier m and reference measurement resource information.

For example, by taking the measurement resource related information being the measurement resource as an example, the number of reporting quantities is N-1, where N is the number of configured measurement resources. One measurement resource set is configured with N=4 measurement resources, corresponding to 4 TRPs. For time difference reporting, the fourth measurement resource (indicating a measurement resource with an index or identifier of 4) is used as a reference measurement resource, and the time differences between the other three measurement resources and the first measurement resource are reported, that is, N-1 reporting quantities are reported, namely: a first reporting quantity determined by the UE based on the first measurement resource and the fourth measurement resource, enabling the network device to determine that the measurement resources corresponding to the first reporting quantity include the measurement resource 1 and the measurement resource 4; a second reporting quantity determined by the UE based on the second measurement resource and the fourth measurement resource, enabling the network device to determine that the measurement resources corresponding to the second reporting quantity include the measurement resource 2 and the measurement resource 4; and a third reporting quantity determined by the UE based on the third measurement resource and the fourth measurement resource, enabling the network device to determine that the measurement resources corresponding to the third reporting quantity include the measurement resource 3 and the measurement resource 4.

It is to be noted that the measurement resource information identifier (or index) m in the embodiment of the present disclosure may refer to an m-th identifier (or index) configured by the network device, or may refer to a specific identifier (or index) value. The identifier (or index) may be an ID value actually configured, or may be a relative ID (e.g., a value arranged in ascending order or descending order), which is not limited here.

(22) determining that the measurement resource related information corresponding to an m-th reporting quantity is: measurement resource related information corresponding to a measurement resource information identifier (m+1) and reference measurement resource information.

For example, one measurement resource set is configured with N=4 measurement resources, whose corresponding indexes or identifiers are: 1, 2, 3, 4 (i.e., numbering starting from 1), corresponding to 4 TRPs. For time difference reporting, a measurement resource ID 1 (indicating a measurement resource with an index or identifier of 1) is used as a reference measurement resource, and the time differences between the other three measurement resources and the first measurement resource are reported, that is, N-1 reporting quantities are reported, namely: a first reporting quantity determined by the UE according to a measurement resource ID 2 and the measurement resource ID 1, enabling the network device to determine that the measurement resources corresponding to the first reporting quantity include the measurement resource ID2 and the measurement resource ID1; a second reporting quantity determined by the UE according to a measurement resource ID 3 and the measurement resource ID 1, enabling the network device to determine that the measurement resources corresponding to the second reporting quantity include the measurement resource ID3 and the measurement resource ID1; and a third reporting quantity determined according to the measurement resource ID 4 and a measurement resource ID 1, enabling the network device to determine that the measurement resources corresponding to the third reporting quantity include the measurement resource ID4 and the measurement resource ID1.

(23) determining that measurement resource related information corresponding to an m-th reporting quantity is: measurement resource related information corresponding to a measurement resource information identifier m and measurement resource related information corresponding to a measurement resource information identifier (m+1).

For example, the UE determines a first reporting quantity according to a measurement resource ID1 and a measurement resource ID2, and then the network device can determine that the measurement resources corresponding to the first reporting quantity include the measurement resource ID1 and the measurement resource ID2.

(24) determining that measurement resource related information corresponding to an m-th reporting quantity is: measurement resource related information corresponding to a measurement resource information identifier m and measurement resource related information corresponding to a measurement resource information identifier (m-1).

For example, the UE determines a first reporting quantity according to a measurement resource ID1 and a measurement resource ID0, then the network device may determine that the measurement resources corresponding to the first reporting quantity include the measurement resource ID1 and the measurement resource ID0.

(25) determining that measurement resource related information corresponding to an m-th reporting quantity is: measurement resource related information corresponding to a measurement resource information identifier p and reference measurement resource information; wherein m and p are greater than or equal to 0, and m and p are different.

In this embodiment, the value of p is determined by the UE, and the UE can report the measurement resource related information p and/or the reference measurement resource information to the network device. For example, by taking a measurement resource ID 4 as a reference measurement resource, for a first reporting quantity, the UE determines that p is 3, and then the UE determines the first reporting quantity according to a measurement resource ID 3 and the measurement resource ID 4; and then the network device can determine that the measurement resources corresponding to the first reporting quantity included the measurement resource ID3 and the measurement resource ID4.

(26) determining indexes or identifiers of measurement resource related information according to an order of reporting quantities.

In this embodiment, the UE may also determine an order of reporting quantities according to indexes or identifiers of the measurement resource related information in a descending order or a descending order. Then, the network device can determine an order of the reporting quantities according to the indexes or identifiers of the measurement resource related information in a descending order or a descending order.

For example, the UE determines the first, second, ..., reporting quantities in order according to the port of measurement resource indexes in ascending order or descending order. Then the network device can determine that port of measurement resources corresponding to the first, second, ... reporting quantities are port 1, port 2, ...

Alternatively, the network device may determine port of measurement resources corresponding to the reporting quantities according to a predefined rule and the order of the reporting quantities. For example, the UE reports, according to the predefined rule, a first reporting quantity determined according to the port of measurement resource 2 and port 1, a second reporting quantity determined according to the port of measurement resource 3 and port 2, and a third reporting quantity determined according to the port of measurement resource 4 and port 3, respectively. The network device can determine, according to the predefined rule, that the first reporting quantity corresponds to the port of measurement resource 2 and port 1, the second reporting quantity corresponds to the port of measurement resource 3 and port 2, and the third reporting quantity corresponds to the port of measurement resource 3 and port 3.

As an optional embodiment, the method further includes at least one of the following:
(1) determining the reference measurement resource information according to a predefined rule.
   For example, first configured measurement resource related information is determined as the reference measurement resource information according to the predefined rule, or y-th configured measurement resource related information is determined as the reference measurement resource information according to the predefined rule.
(2) determining, by the network device, that Y-th measurement resource related information in the measurement resource related information is the reference measurement resource information, where Y is greater than or equal to 1.
   For example, the network device configures first measurement resource related information as the reference measurement resource information, or the network device configures the y-th measurement resource related information as the reference measurement resource information. The network device transmits the reference measurement resource information to the UE.
(3) determining the reference measurement resource information according to an indication of the UE.

In this case, the UE determines the reference measurement resource information. For example, the UE determines the reference measurement resource information based on measurement. In case that the UE determines in the measurement that channel quality corresponding to a third measurement resource is better, such as having a higher layer 1 reference signal received power (L1-RSRP), or layer 1 signal-to-noise and interference ratio (L1-SINR) or CQI value, it can be used as the reference measurement resource information; or, the UE determines that a second measurement resource is received by the UE first and taking the second measurement resource as a reference can ensure that the time difference between all measurement resources is a positive value, then the second measurement resource can be used as a reference. The UE indicates the determined reference measurement resource information to the network device.

Optionally, the indication information of the measurement resource related information includes at least one of the following:
bit information corresponding to indexes or identifiers of measurement resource related information; or
indexes or identifiers of measurement resource related information.

In this embodiment, the UE can report the measurement resource related information corresponding to each reporting quantity in case of transmitting the reporting quantity, so that the network device can determine the measurement resource related information corresponding to each reporting quantity based on the indication information, thereby compensating the transmit signal of each TRP and eliminating the time difference, frequency difference, phase difference or reciprocity error between multiple TRPs.

Specifically, the UE may indicate, by bit mapping, the index or ID of one or more pieces of measurement resource related information corresponding to each reporting quantity. For example, the UE indicates a sequence of measurement resource set IDs by an additional bit. Alternatively, the UE may also directly indicate the index or ID of one or more pieces of measurement resource related information corresponding to the reporting quantity. For example, the sequence of measurement resource set IDs may be used to ensure that all reporting quantities share the same sign, so that the reporting quantity is a non-negative value, or a non-positive value, thereby reducing feedback overhead.

Optionally, the reporting quantity includes: a first reporting quantity part and a second reporting quantity part. The first reporting quantity part corresponds to a first quantization interval, the second reporting quantity part corresponds to a second quantization interval. A quantization range of the reporting quantity corresponding to the first quantization interval is different from a quantization range of the reporting quantity corresponding to the second quantization interval.

In this embodiment, in case of reporting the reporting quantity, the UE can use a two-part quantization method. The first part is used to report an interval range of the reporting quantity, such as [a, b] samples, or [a, b] Hertz. The second part is used to perform further quantized reporting for the interval reported in the first part (such as fine reporting with a smaller granularity), which is suitable for situations where the number of intervals in the first part is large, such as time difference or frequency difference.

Optionally, the UE adopts non-differential reporting in case of reporting each reporting quantity, that is, no differential processing is performed between the reporting quantities, so that the sequence of the reporting quantities can be determined according to the configuration order of the measurement resource related information. In some cases, the reported time domain related parameter (such as time difference), frequency domain related parameter (such as frequency difference), and phase related parameter (such as phase difference) can be directly quantized in case of reporting, such as determining s range of the reporting quantity and quantizing it within the determined range.

In the embodiment of the present disclosure, the network device receives the reporting quantity reported by the UE, or receives the reporting quantity and measurement resource related information corresponding to the reporting quantity reported by the UE. The transmit signal of the TRP can be compensated based on the reporting quantity and measurement resource related information corresponding to the reporting quantity, thereby eliminating parameter differences between TRPs, synchronizing signal parameters between multiple TRPs received by the UE, and ensuring the transmission performance of CJT.

One embodiment of the present disclosure further provides a measurement reporting method, including:
transmitting, by a network device, a configuration parameter corresponding to measurement resource related information to a UE;
transmitting, by the network device, a measurement resource to the UE.

Optionally, the measurement resource related information and the configuration parameter satisfy a first rule, and the first rule includes at least one of the following:
one measurement resource related information corresponds to one configuration parameter;
one measurement resource related information group corresponds to one configuration parameter; or
a measurement resource related information group corresponding to a code division multiplexing (CDM) group corresponds to one configuration parameter.

The above embodiments introduce the measurement reporting method of the present disclosure. The following embodiments will further illustrate the corresponding device in conjunction with the accompanying drawings.

Specifically, as shown in FIG. 3, one embodiment of the present disclosure provides a measurement reporting apparatus 300, which is applied to a UE and includes:
a first determining unit 310 used to determine a reporting quantity according to multiple pieces of measurement resource related information;
a first transmission unit 320 used to report the reporting quantity to a network device, or report the reporting quantity and indication information of multiple pieces of measurement resource related information corresponding to the reporting quantity to the network device.

The reporting quantity includes at least one of the following:
time domain related parameter;
frequency domain related parameter; or
phase related parameter.

Optionally, the apparatus further includes:
a second determining unit used to determine a configuration parameter corresponding to the measurement resource related information;
a second receiving unit used to receive the measurement resource related information according to the configuration parameter;
where the measurement resource related information includes at least one of the following: measurement resource, port of measurement resource, or measurement resource set.

Optionally, the second determining unit is specifically used to:
determine the configuration parameter corresponding to the measurement resource related information according to a first rule;
   or,
determine the configuration parameter corresponding to measurement resource related information according to configuration information of the network device;
where the configuration parameter includes transmission configuration indication TCI state and/or quasi co-location QCL parameter.

Optionally, the first rule includes at least one of the following:
one measurement resource related information corresponds to one configuration parameter;
one measurement resource related information group corresponds to one configuration parameter; or
a measurement resource related information group corresponding to a code division multiplexing (CDM) group corresponds to one configuration parameter.

Optionally, the second receiving unit is specifically used to perform at least one of the following:
determining a reference configuration parameter in the configuration parameter, and receiving a measurement resource by using the reference configuration parameter;
determining a first configuration parameter according to the configuration parameter and a reporting quantity configured by the network device, and receiving a measurement resource by using the first configuration parameter; or
receiving a measurement resource based on a configuration parameter type included in the configuration parameter.

Optionally, the second receiving unit is specifically used to perform at least one of the following:
determining the reference configuration parameter according to a predefined rule;
determining the reference configuration parameter according to an indication of the network device; or
determining that an N-th configuration parameter in the configuration parameters is the reference configuration parameter, where N is greater than or equal to 1.

Optionally, the second receiving unit is specifically used to perform at least one of the following:
in case that the reporting quantity configured by the network device is a first reporting type, determining that the first configuration parameter is a reference configuration parameter in the configuration parameters; or
in case that the reporting quantity configured by the network device is not the first reporting type, determining that the first configuration parameter is all configuration parameters configured by the network device.

Optionally, the second receiving unit is specifically used to:
in case that the configuration parameter includes a spatial parameter, use different spatial parameters for each measurement resource related information to receive the measurement resource; or,
in case that the configuration parameter includes a time domain parameter or frequency domain parameter, use the same time domain parameter or the same frequency domain parameter for each measurement resource related information to receive the measurement resource; or,
for one measurement resource, receive the measurement resource according to a configuration parameter type configured by the network device; where the network device configures at most one time domain parameter or at most one frequency domain parameter, and/or configures one or more spatial domain parameters for one measurement resource.

Optionally, the first determining unit is specifically used to perform at least one of the following:
determining the reporting quantity according to a configuration order or an indication order of multiple pieces of measurement resource related information; or
determining the reporting quantity according to indexes or identifiers of multiple pieces of measurement resource related information.

Optionally, the first determining unit is specifically used to perform at least one of the following:
determining a reporting quantity according to at least two measurement resources of a measurement resource set; where the measurement resource set includes multiple measurement resources;
determining one or more reporting quantities according to multiple ports corresponding to one measurement resource; or
determining a reporting quantity according to at least two measurement resources of multiple measurement resource sets.

Optionally, the first determining unit is specifically used to perform at least one of the following:
determining an n-th reporting quantity according to n-th measurement resource related information and reference measurement resource information, where the reference measurement resource information is one of the measurement resource related information;
determining an n-th reporting quantity according to a (n+1)-th measurement resource related information and reference measurement resource information;
determining an n-th reporting quantity according to an n-th measurement resource related information and a (n+1)-th measurement resource related information
determining an n-th reporting quantity according to the n-th measurement resource related information and the (n-1)-th measurement resource related information; or
determining an n-th reporting quantity according to a k-th measurement resource related information and a reference measurement resource information; where n and k are greater than or equal to 1, and n and k are different.

Optionally, the first determining unit is specifically used to perform at least one of the following:
determining an m-th reporting quantity according to measurement resource related information corresponding to a measurement resource information identifier m and reference measurement resource information; where m is greater than or equal to 0;
determining an m-th reporting quantity according to measurement resource related information corresponding to a measurement resource information identifier (m+1) and reference measurement resource information;
determining an m-th reporting quantity according to measurement resource related information corresponding to a measurement resource information identifier m and measurement resource related information corresponding to a measurement resource information identifier (m+1);
determining an m-th reporting quantity according to measurement resource related information corresponding to a measurement resource information identifier m and measurement resource related information corresponding to a measurement resource information identifier (m-1);
determining an m-th reporting quantity according to measurement resource related information corresponding to a measurement resource information identifier p and reference measurement resource information; where m and p are greater than or equal to 0, and m is different from p; or
determining the reporting quantity according to an order of indexes or identifiers of multiple pieces of measurement resource related information;
where m and p are greater than or equal to 0, and m is different from p.

Optionally, the apparatus further includes a third determining unit used to perform at least one of the following:
determining the reference measurement resource information according to a predefined rule;
determining the reference measurement resource information according to configuration of the network device; or
determining that X-th measurement resource related information in the measurement resource related information is the reference measurement resource information, where X is greater than or equal to 1.

Optionally, the indication information of the measurement resource related information includes at least one of the following:
bit information corresponding to indexes or identifiers of measurement resource related information; or
indexes or identifiers of measurement resource related information.

Optionally, the reporting quantity includes: a first reporting quantity part and a second reporting quantity part. The first reporting quantity part corresponds to a first quantization interval, the second reporting quantity part corresponds to a second quantization interval. A quantization range of the reporting quantity corresponding to the first quantization interval is different from a quantization range of the reporting quantity corresponding to the second quantization interval.

It is to be noted here that the above apparatus provided in the embodiment of the present disclosure can implement all the method steps implemented in the above method embodiment applied to the UE, and can achieve the same technical effect. The parts and beneficial effects of this embodiment that are the same as the method embodiment will not be described in detail here.

Specifically, as shown in FIG. 4, one embodiment of the present disclosure provides a measurement reporting apparatus 400, which is applied to a network device, including:
a first receiving unit 410 used to receive a reporting quantity transmitted by a user equipment (UE), or receive a reporting quantity and indication information of multiple pieces of measurement resource related information corresponding to the reporting quantity, transmitted by the UE.

The reporting quantity includes at least one of the following:
time domain related parameter;
frequency domain related parameter; or
phase related parameter.

Optionally, the apparatus further includes:
a second transmission unit used to transmit a configuration parameter corresponding to the measurement resource related information to the UE;
a third transmission unit used to transmit a measurement resource to the UE.

Optionally, the measurement resource related information and the configuration parameter satisfy a first rule, where the first rule includes at least one of the following:
one measurement resource related information corresponds to one configuration parameter;
one measurement resource related information group corresponds to one configuration parameter; or
a measurement resource related information group corresponding to a code division multiplexing (CDM) group corresponds to one configuration parameter.

Optionally, the apparatus further includes:
a fourth determining unit used to determine measurement resource related information corresponding to the reporting quantity.

Optionally, the fourth determining unit is specifically used to perform at least one of the following:
determining the measurement resource related information corresponding to the reporting quantity according to an order of the reporting quantities and a configuration order or an indication order of the measurement resource related information;
determining the measurement resource related information corresponding to the reporting quantity according to an order of the reporting quantities and indexes or identifiers of multiple pieces of measurement resource related information;
determining the measurement resource related information corresponding to the reporting quantity according to according to a second rule; or
determining the measurement resource related information corresponding to the reporting quantity according to indication information of the measurement resource related information included in the measurement information.

Optionally, the fourth determining unit is specifically used to perform at least one of the following:
determining that measurement resource related information corresponding to an n-th reporting quantity is: n-th measurement resource related information and reference measurement resource information; where the reference measurement resource information is one of the measurement resource related information;
determining that measurement resource related information corresponding to an n-th reporting quantity is: (n+1)-th measurement resource related information and reference measurement resource information;
determining that measurement resource related information corresponding to an n-th reporting quantity is: n-th measurement resource related information and (n+1)-th measurement resource related information;
determining that the measurement resource related information corresponding to an n-th reporting quantity is: n-th measurement resource related information and (n-1)-th measurement resource related information; or
determining that the measurement resource related information corresponding to an n-th reporting quantity is: k-th measurement resource related information and reference measurement resource information;
where n, k are greater than or equal to 1, and n and k are different.

Optionally, the fourth determining unit is specifically used to perform at least one of the following:
determining that measurement resource related information corresponding to an m-th reporting quantity includes: measurement resource related information corresponding to a measurement resource information identifier m and reference measurement resource information;
determining that the measurement resource related information corresponding to an m-th reporting quantity is: measurement resource related information corresponding to a measurement resource information identifier (m+1) and reference measurement resource information;
determining that measurement resource related information corresponding to an m-th reporting quantity is: measurement resource related information corresponding to a measurement resource information identifier m and measurement resource related information corresponding to a measurement resource information identifier (m+1);
determining that measurement resource related information corresponding to an m-th reporting quantity is: measurement resource related information corresponding to a measurement resource information identifier m and measurement resource related information corresponding to a measurement resource information identifier (m-1);
determining that measurement resource related information corresponding to an m-th reporting quantity is: measurement resource related information corresponding to a measurement resource information identifier p and reference measurement resource information; wherein m and p are greater than or equal to 0, and m and p are different; or
determining indexes or identifiers of measurement resource related information according to an order of reporting quantities;
where m and p are greater than or equal to 0, and m is different from p.

Optionally, the apparatus further includes a fifth determining unit used to perform at least one of the following:
determining the reference measurement resource information according to a predefined rule;
determining that Y-th measurement resource related information in the measurement resource related information is the reference measurement resource information, where Y is greater than or equal to 1; or
determining the reference measurement resource information according to an indication of the UE.

Optionally, the indication information of the measurement resource related information includes at least one of the following:
bit information corresponding to indexes or identifiers of measurement resource related information; or
indexes or identifiers of measurement resource related information.

Optionally, the reporting quantity includes: a first reporting quantity part and a second reporting quantity part. The first reporting quantity part corresponds to a first quantization interval, the second reporting quantity part corresponds to a second quantization interval. A quantization range of the reporting quantity corresponding to the first quantization interval is different from a quantization range of the reporting quantity corresponding to the second quantization interval.

It is to be noted here that the above apparatus provided in the embodiment of the present disclosure can implement all the method steps implemented in the above method embodiment applied to the network device, and can achieve the same technical effect. The parts and beneficial effects of this embodiment that are the same as the method embodiment will not be described in detail here.

It is to be noted that division of units in the embodiment of the present disclosure is exemplary, and is only a logical function division, and there may be another division manner in actual implementation. In addition, various functional units in each embodiment of the present application may be integrated into one processing unit, each unit may exist separately physically, or two or more units may be integrated into one unit. The foregoing integrated units may be implemented in the form of hardware or in the form of software functional units.

In case that the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

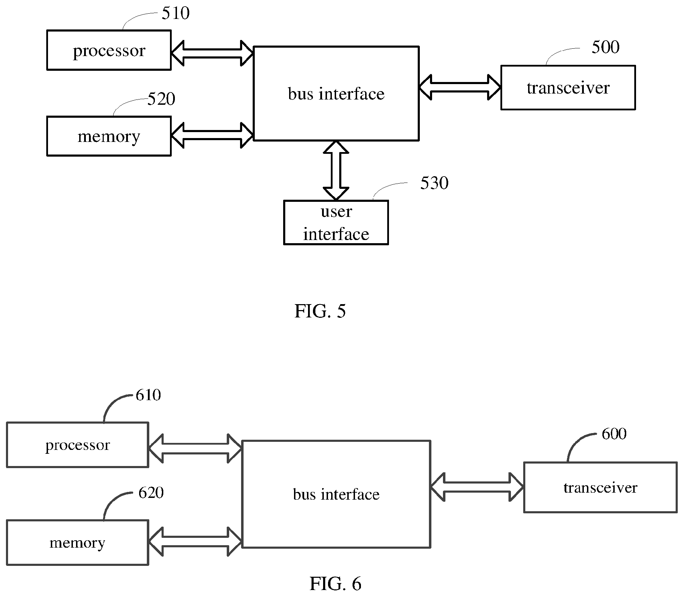

As shown in FIG. 5, one embodiment of the present disclosure further provides a user equipment (UE), including: a memory 520, a transceiver 500, and a processor 510. The memory 520 is used to store a computer program. The transceiver 500 is used to receive and send data under the control of the processor 510. The processor 510 is used to read the computer program in the memory and perform the following operations:
determining a reporting quantity according to multiple pieces of measurement resource related information;
reporting the reporting quantity to a network device, or reporting the reporting quantity and indication information of multiple pieces of measurement resource related information corresponding to the reporting quantity to the network device.

The reporting quantity includes at least one of the following:
time domain related parameter;
frequency domain related parameter; or
phase related parameter.

Optionally, the processor is used to read the computer program in the memory and perform the following operations:
determining a configuration parameter corresponding to the measurement resource related information;
receiving the measurement resource related information according to the configuration parameter;
where the measurement resource related information includes at least one of the following: measurement resource, port of measurement resource, or measurement resource set.

Optionally, the processor is used to read the computer program in the memory and perform the following operations:
determining the configuration parameter corresponding to the measurement resource related information according to a first rule;
   or,
determining the configuration parameter corresponding to measurement resource related information according to configuration information of the network device;
where the configuration parameter includes transmission configuration indication TCI state and/or quasi co-location QCL parameter.

Optionally, the first rule includes at least one of the following:
one measurement resource related information corresponds to one configuration parameter;
one measurement resource related information group corresponds to one configuration parameter; or
a measurement resource related information group corresponding to a code division multiplexing (CDM) group corresponds to one configuration parameter.

Optionally, the processor is used to read the computer program in the memory and perform the following operations:
determining a reference configuration parameter in configuration parameters, and receiving a measurement resource by using the reference configuration parameter;
determining a first configuration parameter according to the configuration parameter and a reporting quantity configured by the network device, and receiving a measurement resource by using the first configuration parameter;
receiving a measurement resource based on a configuration parameter type included in the configuration parameter.

Optionally, the processor is used to read the computer program in the memory and perform the following operations:
determining the reference configuration parameter according to a predefined rule;
determining the reference configuration parameter according to an indication of the network device;
determining that an N-th configuration parameter in the configuration parameters is the reference configuration parameter, where N is greater than or equal to 1.

Optionally, the processor is used to read the computer program in the memory and perform the following operations:
in case that the reporting quantity configured by the network device is a first reporting type, determining that the first configuration parameter is a reference configuration parameter in the configuration parameters;
in case that the reporting quantity configured by the network device is not the first reporting type, determining that the first configuration parameter is all configuration parameters configured by the network device.

Optionally, the processor is used to read the computer program in the memory and perform the following operations:
in case that the configuration parameter includes a spatial parameter, using different spatial parameters for each measurement resource related information to receive the measurement resource; or,
in case that the configuration parameter includes a time domain parameter or frequency domain parameter, using the same time domain parameter or the same frequency domain parameter for each measurement resource related information to receive the measurement resource; or,
for one measurement resource, receiving the measurement resource according to a configuration parameter type configured by the network device; where the network device configures at most one time domain parameter or at most one frequency domain parameter, and/or configures one or more spatial domain parameters for one measurement resource.

Optionally, the processor is used to read the computer program in the memory and perform the following operations:
determining the reporting quantity according to a configuration order or an indication order of multiple pieces of measurement resource related information;
determining the reporting quantity according to indexes or identifiers of multiple pieces of measurement resource related information.

Optionally, the processor is used to read the computer program in the memory and perform the following operations:
determining a reporting quantity according to at least two measurement resources of a measurement resource set; where the measurement resource set includes multiple measurement resources;
determining one or more reporting quantities according to multiple ports corresponding to one measurement resource;
determining a reporting quantity according to at least two measurement resources of multiple measurement resource sets.

Optionally, the processor is used to read the computer program in the memory and perform the following operations:
determining an n-th reporting quantity according to n-th measurement resource related information and reference measurement resource information, where the reference measurement resource information is one of the measurement resource related information;
determining an n-th reporting quantity according to a (n+1)-th measurement resource related information and reference measurement resource information;
determining an n-th reporting quantity according to an n-th measurement resource related information and a (n+1)-th measurement resource related information
determining an n-th reporting quantity according to the n-th measurement resource related information and the (n-1)-th measurement resource related information;
determining an n-th reporting quantity according to a k-th measurement resource related information and a reference measurement resource information; where n and k are greater than or equal to 1, and n and k are different.

Optionally, the processor is used to read the computer program in the memory and perform the following operations:
determining an m-th reporting quantity according to measurement resource related information corresponding to a measurement resource information identifier m and reference measurement resource information; where m is greater than or equal to 0;
determining an m-th reporting quantity according to measurement resource related information corresponding to a measurement resource information identifier (m+1) and reference measurement resource information;
determining an m-th reporting quantity according to measurement resource related information corresponding to a measurement resource information identifier m and measurement resource related information corresponding to a measurement resource information identifier (m+1);
determining an m-th reporting quantity according to measurement resource related information corresponding to a measurement resource information identifier m and measurement resource related information corresponding to a measurement resource information identifier (m-1);
determining an m-th reporting quantity according to measurement resource related information corresponding to a measurement resource information identifier p and reference measurement resource information; where m and p are greater than or equal to 0, and m is different from p;
determining the reporting quantity according to an order of indexes or identifiers of multiple pieces of measurement resource related information.
where m and p are greater than or equal to 0, and m is different from p.

Optionally, the processor is used to read the computer program in the memory and perform the following operations:
determining the reference measurement resource information according to a predefined rule;
determining the reference measurement resource information according to configuration of the network device;
determining that X-th measurement resource related information in the measurement resource related information is the reference measurement resource information, where X is greater than or equal to 1.

Optionally, the indication information of the measurement resource related information includes at least one of the following:
bit information corresponding to indexes or identifiers of measurement resource related information; or
indexes or identifiers of measurement resource related information.

Optionally, the reporting quantity includes: a first reporting quantity part and a second reporting quantity part. The first reporting quantity part corresponds to a first quantization interval, the second reporting quantity part corresponds to a second quantization interval. A quantization range of the reporting quantity corresponding to the first quantization interval is different from a quantization range of the reporting quantity corresponding to the second quantization interval.

In FIG. 5, a bus architecture may include any number of interconnected bus and bridge. Specifically, various circuits of one or more processors, which are represented by the processor 510, and one or more memories, which are represented by the memory 520, are linked together. The bus architecture may link various other circuits, such as a peripheral device, voltage regulator and a power management circuit together. These features are well known in this field; therefore, the present disclosure does not make further description on these features. The bus interface provides an interface. The transceiver 500 may be multiple elements, including a transmitter and a receiver and provide units, which communicate with other devices on the transmission medium. For different UEs, a user interface 530 may be an interface that can be connected to external or internal devices. The connected devices include but are not limited to a small keyboard, a display, a speaker, a microphone, a joystick, etc.

The processor 510 is responsible for managing the bus architecture and the normal processing. The memory 520 may be used to store data used by the processor 510 for performing operations.

In some embodiments, the processor 510 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

It is to be noted here that the above UE provided in the embodiment of the present disclosure can implement all the method steps implemented in the above method embodiment applied to the UE, and can achieve the same technical effect. The parts and beneficial effects of this embodiment that are the same as the method embodiment will not be described in detail here.

As shown in FIG. 6, one embodiment of the present disclosure further provides a network device, including: a memory 620, a transceiver 600, and a processor 610. The memory 620 is used to store a computer program. The transceiver 600 is used to receive and send data under the control of the processor 610. The processor 610 is used to read the computer program in the memory and perform the following operations:
receiving a reporting quantity transmitted by a user equipment (UE), or receiving a reporting quantity and indication information of multiple pieces of measurement resource related information corresponding to the reporting quantity, transmitted by the UE.

The reporting quantity includes at least one of the following:
time domain related parameter;
frequency domain related parameter; or
phase related parameter.

Optionally, the processor is used to read the computer program in the memory and perform the following operations:
transmitting a configuration parameter corresponding to the measurement resource related information to the UE;
transmitting a measurement resource to the UE.

Optionally, the measurement resource related information and the configuration parameter satisfy a first rule, where the first rule includes at least one of the following:
one measurement resource related information corresponds to one configuration parameter;
one measurement resource related information group corresponds to one configuration parameter; or
a measurement resource related information group corresponding to a code division multiplexing (CDM) group corresponds to one configuration parameter.

Optionally, the processor is used to read the computer program in the memory and perform the following operations:
determining measurement resource related information corresponding to the reporting quantity.

Optionally, the processor is used to read the computer program in the memory and perform the following operations:
determining the measurement resource related information corresponding to the reporting quantity according to an order of the reporting quantities and a configuration order or an indication order of the measurement resource related information;
determining the measurement resource related information corresponding to the reporting quantity according to an order of the reporting quantities and indexes or identifiers of multiple pieces of measurement resource related information;
determining the measurement resource related information corresponding to the reporting quantity according to according to a second rule;
determining the measurement resource related information corresponding to the reporting quantity according to indication information of the measurement resource related information included in the measurement information.

Optionally, the processor is used to read the computer program in the memory and perform the following operations:
determining that measurement resource related information corresponding to an n-th reporting quantity is: n-th measurement resource related information and reference measurement resource information; where the reference measurement resource information is one of the measurement resource related information;
determining that measurement resource related information corresponding to an n-th reporting quantity is: (n+1)-th measurement resource related information and reference measurement resource information;
determining that measurement resource related information corresponding to an n-th reporting quantity is: n-th measurement resource related information and (n+1)-th measurement resource related information;
determining that the measurement resource related information corresponding to an n-th reporting quantity is: n-th measurement resource related information and (n-1)-th measurement resource related information;
determining that the measurement resource related information corresponding to an n-th reporting quantity is: k-th measurement resource related information and reference measurement resource information;
where n, k are greater than or equal to 1, and n and k are different.

Optionally, the processor is used to read the computer program in the memory and perform the following operations:
determining that measurement resource related information corresponding to an m-th reporting quantity includes: measurement resource related information corresponding to a measurement resource information identifier m and reference measurement resource information;
determining that the measurement resource related information corresponding to an m-th reporting quantity is: measurement resource related information corresponding to a measurement resource information identifier (m+1) and reference measurement resource information;
determining that measurement resource related information corresponding to an m-th reporting quantity is: measurement resource related information corresponding to a measurement resource information identifier m and measurement resource related information corresponding to a measurement resource information identifier (m+1);
determining that measurement resource related information corresponding to an m-th reporting quantity is: measurement resource related information corresponding to a measurement resource information identifier m and measurement resource related information corresponding to a measurement resource information identifier (m-1);
determining that measurement resource related information corresponding to an m-th reporting quantity is: measurement resource related information corresponding to a measurement resource information identifier p and reference measurement resource information; wherein m and p are greater than or equal to 0, and m and p are different;
determining indexes or identifiers of measurement resource related information according to an order of reporting quantities;
where m and p are greater than or equal to 0, and m is different from p.

Optionally, the processor is used to read the computer program in the memory and perform the following operations:
determining the reference measurement resource information according to a predefined rule;
determining that Y-th measurement resource related information in the measurement resource related information is the reference measurement resource information, where Y is greater than or equal to 1;
determining the reference measurement resource information according to an indication of the UE.

Optionally, the indication information of the measurement resource related information includes at least one of the following:
bit information corresponding to indexes or identifiers of measurement resource related information; or
indexes or identifiers of measurement resource related information.

Optionally, the reporting quantity includes: a first reporting quantity part and a second reporting quantity part. The first reporting quantity part corresponds to a first quantization interval, the second reporting quantity part corresponds to a second quantization interval. A quantization range of the reporting quantity corresponding to the first quantization interval is different from a quantization range of the reporting quantity corresponding to the second quantization interval.

In FIG. 6, a bus architecture may include any number of interconnected bus and bridge. Specifically, various circuits of one or more processors, which are represented by the processor 610, and one or more memories, which are represented by the memory 620, are linked together. The bus architecture may link various other circuits, such as a peripheral device, voltage regulator and a power management circuit together. These features are well known in this field; therefore, the present disclosure does not make further description on these features. The bus interface provides an interface. The transceiver 600 may be multiple elements, including a transmitter and a receiver and provide units, which communicate with other devices on the transmission medium. The processor 610 is responsible for managing the bus architecture and the normal processing. The memory 620 may be used to store data used by the processor 610 for performing operations.

The processor 1100 may be a central processing unit (CPU), an application specific integrated circuit (ASIC), a field-programmable gate array (FPGA) or a complex programmable logic device (CPLD). The processor may also adopt multi-core architecture.

The processor 610 may be a CPU, an ASIC, an FPGA or a CPLD, and the processor may also adopt a multi-core architecture.

It is to be noted here that the above network device provided in the embodiment of the present disclosure can implement all the method steps implemented by the above method embodiment applied to the network device, and can achieve the same technical effect. The parts and beneficial effects of this embodiment that are the same as the method embodiment will not be described in detail here.

In addition, one embodiment of the present disclosure further provides a processor-readable storage medium, which stores a computer program. In case that the computer program is executed by the processor, the steps of the measurement reporting method are implemented and the same technical effect can be achieved, which will not be repeated here to avoid repetition. The readable storage medium can be any available medium or data storage device that can be accessed by the processor, including but not limited to magnetic storage (such as floppy disks, hard disks, magnetic tapes, magneto-optical disks (MO), etc.), optical storage (such as compact disks (CD), digital video disks (DVD), Blu-ray Discs (BD), high-definition versatile disks (HVD), etc.), and semiconductor memory (such as read-only memory (ROM), erasable programmable read-only memory (EPROM), electrically erasable programmable read-only memory (EEPROM), non-volatile memory (NAND FLASH), solid-state disk (Solid State Disk or Solid State Drive, SSD)), etc.

It is to be noted that the technical solution provided by the embodiments of the present disclosure can be applicable to a variety of systems, especially 5G systems. For example, the applicable system can be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, an advanced long term evolution (LTE-A) system, a universal mobile telecommunication system (UMTS), a world-wide interoperability for microwave access (WiMAX) system, a 5G new radio (NR) system, etc. These various systems include UE and network device. The system may also include a core network part, such as an evolved packet system (EPS), a 5G system (5G System, 5GS), etc.

The UE involved in the embodiments of the present disclosure may be a device that provides voice and/or data connectivity to a user, a handheld device with a wireless connection function, or other processing devices connected to a wireless modem. In different systems, the names of terminal devices may also be different. For example, in a 5G system, a terminal device may be referred to as a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network, such as a personal communication service (PCS) phone, cordless phone, session initiation protocol (SIP) phone, wireless local loop (WLL) station, personal digital assistant (PDA), and other devices. The wireless terminal device may also be referred to as a system, a subscriber unit, a subscriber station, a mobile station, a mobile, a remote station, an access point, a remote terminal, an access terminal, a user terminal, a user agent, and a user device, which is not limited in the embodiments of the present disclosure.

In the embodiment of the present disclosure, the network device may be a base station, which may include multiple cells providing services for the terminal. Depending on the specific application scenario, the base station may also be referred to as an access point, or may be a device in an access network that communicates with a wireless terminal device through one or more sectors on an air interface, or may be another name. The network device may be used to interchange received air frames with Internet Protocol (IP) packets, and serve as a router between the wireless terminal device and the rest of the access network, wherein the rest of the access network may include an Internet Protocol (IP) communication network. The network device may also coordinate the attribute management of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolutionary network device (evolutional Node B, eNB or e-NodeB) in the long term evolution (LTE) system, a 5G base station (gNB) in the 5G network architecture (next generation system), or a home evolved Node B (HeNB), a relay node, a home base station (femto), a pico base station (pico), etc., which is not limited in the embodiments of the present disclosure. In some network structures, the network device may include a centralized unit (CU) node and a distributed unit (DU) node, and the centralized unit and the distributed unit may also be arranged geographically separately.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

A person skilled in the art should understand that the embodiments of the present application may be provided as methods, systems, or computer program products. Therefore, the present application may adopt the form of complete hardware embodiments, complete software embodiments, or embodiments combining software and hardware aspects. Moreover, this application may adopt the form of a computer program product implemented on one or more computer available storage media (including but not limited to a disk storage, an optical storage, etc.) containing computer available program code.

The present is described with reference to flowcharts and/or block diagrams of methods, devices (systems), and computer program products according to the embodiments of the present application. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, in case that a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. A measurement reporting method, comprising:
determining, by a user equipment (UE), a reporting quantity according to multiple pieces of measurement resources related information;
reporting the reporting quantity to a network device, or reporting the reporting quantity and indication information of the multiple pieces of measurement resource related information corresponding to the reporting quantity to the network device;
wherein the reporting quantity comprises at least one of the following:
time domain related parameter;
frequency domain related parameter; or
phase related parameter.

2. The method according to claim 1, further comprising:
determining, by the UE, a configuration parameter corresponding to the measurement resource related information;
receiving the measurement resource related information according to the configuration parameter;
wherein the measurement resource related information includes at least one of the following: measurement resource, port of measurement resource, or measurement resource set.

3. The method according to claim 2, wherein the determining, by the UE, a configuration parameter corresponding to the measurement resource related information, comprises:
determining the configuration parameter corresponding to the measurement resource related information according to a first rule;
or,
determining the configuration parameter corresponding to measurement resource related information according to configuration information of the network device;
wherein the configuration parameter comprises transmission configuration indication (TCI) state and/or quasi co-location (QCL) parameter.

4. The method according to claim 3, wherein the first rule comprises at least one of the following:
one measurement resource related information corresponds to one configuration parameter;
one measurement resource related information group corresponds to one configuration parameter; or
a measurement resource related information group corresponding to a code division multiplexing (CDM) group corresponds to one configuration parameter.

5. The method according to claim 2, wherein the receiving the measurement resource related information according to the configuration parameter, comprises at least one of the following:
determining, by the UE, a reference configuration parameter in the configuration parameter, and receiving a measurement resource by using the reference configuration parameter;
determining, by the UE, a first configuration parameter according to the configuration parameter and a reporting quantity configured by the network device, and receiving a measurement resource by using the first configuration parameter; or,
receiving, by the UE, a measurement resource based on a configuration parameter type included in the configuration parameter.

6. The method according to claim 5, wherein the determining, by the UE, a reference configuration parameter in the configuration parameter, comprises at least one of the following:
determining, by the UE, the reference configuration parameter according to a predefined rule;
determining, by the UE, the reference configuration parameter according to an indication of the network device; or
determining, by the UE, that an N-th configuration parameter in the configuration parameter is the reference configuration parameter, wherein N is greater than or equal to 1.

7. The method according to claim 5, wherein the determining, by the UE, a first configuration parameter according to the configuration parameter and a reporting quantity configured by the network device, comprises at least one of the following:
in case that the reporting quantity configured by the network device is a first reporting type, determining, by the UE, that the first configuration parameter is a reference configuration parameter in the configuration parameter; or
in case that the reporting quantity configured by the network device is not the first reporting type, determining, by the UE, that the first configuration parameter is all configuration parameters configured by the network device.

8. The method according to claim 5, wherein the receiving, by the UE, a measurement resource based on a configuration parameter type included in the configuration parameter, comprises:
in case that the configuration parameter includes a spatial parameter, using, by the UE, different spatial parameters for each measurement resource related information to receive the measurement resource; or,
in case that the configuration parameter includes a time domain parameter or frequency domain parameter, using, by the UE, the same time domain parameter or the same frequency domain parameter for each measurement resource related information to receive the measurement resource; or,
for one measurement resource, receiving, by the UE, the measurement resource according to a configuration parameter type configured by the network device; wherein the network device configures at most one time domain parameter or at most one frequency domain parameter, and/or configures one or more spatial domain parameters for one measurement resource.

9. The method according to claim 1, wherein the determining, by the UE, the reporting quantity according to the multiple pieces of measurement resource related information, comprises at least one of the following:
determining, by the UE, the reporting quantity according to a configuration order or an indication order of multiple pieces of measurement resource related information; or
determining, by the UE, the reporting quantity according to indexes or identifiers of multiple pieces of measurement resource related information.

10. The method according to claim 9, wherein the determining, by the UE), the reporting quantity according to the multiple pieces of measurement resource related information, comprises at least one of the following:
determining, by the UE, a reporting quantity according to at least two measurement resources of a measurement resource set; wherein the measurement resource set includes multiple measurement resources;
determining, by the UE, one or more reporting quantities according to multiple ports corresponding to one measurement resource; or
determining, by the UE, a reporting quantity according to at least two measurement resources of multiple measurement resource sets.

11. The method according to claim 9, wherein the determining, by the UE, the reporting quantity according to a configuration order or an indication order of multiple pieces of measurement resource related information, comprises at least one of the following:
determining, by the UE, an n-th reporting quantity according to n-th measurement resource related information and reference measurement resource information, wherein the reference measurement resource information is one of the measurement resource related information;
determining, by the UE, an n-th reporting quantity according to a (n+1)-th measurement resource related information and reference measurement resource information;
determining, by the UE, an n-th reporting quantity according to an n-th measurement resource related information and a (n+1)-th measurement resource related information
determining, by the UE, an n-th reporting quantity according to the n-th measurement resource related information and the (n-1)-th measurement resource related information; or
determining, by the UE, an n-th reporting quantity according to k-th measurement resource related information and reference measurement resource information;
wherein n and k are greater than or equal to 1, and n and k are different.

12. The method according to claim 9, wherein the determining, by the UE, the reporting quantity according to indexes or identifiers of multiple pieces of measurement resource related information, comprises at least one of the following:
determining, by the UE, an m-th reporting quantity according to measurement resource related information corresponding to a measurement resource information identifier m and reference measurement resource information;
determining, by the UE, an m-th reporting quantity according to measurement resource related information corresponding to a measurement resource information identifier (m+1) and reference measurement resource information;
determining, by the UE, an m-th reporting quantity according to measurement resource related information corresponding to a measurement resource information identifier m and measurement resource related information corresponding to a measurement resource information identifier (m+1);
determining, by the UE, an m-th reporting quantity according to measurement resource related information corresponding to a measurement resource information identifier m and measurement resource related information corresponding to a measurement resource information identifier (m-1);
determining, by the UE, an m-th reporting quantity according to measurement resource related information corresponding to a measurement resource information identifier p and reference measurement resource information; or
determining, by the UE, the reporting quantity according to an order of indexes or identifiers of multiple pieces of measurement resource related information;
wherein m and p are greater than or equal to 0, and m is different from p.

13. The method according to any one of claims 1, 9, 11, and 12, further comprising at least one of the following:
determining, by the UE, the reference measurement resource information according to a predefined rule;
determining, by the UE, the reference measurement resource information according to configuration of the network device; or
determining, by the UE, that X-th measurement resource related information in the measurement resource related information is the reference measurement resource information, wherein X is greater than or equal to 1.

14. The method according to claim 1, wherein the indication information of the measurement resource related information includes at least one of the following:
bit information corresponding to indexes or identifiers of measurement resource related information; or
indexes or identifiers of measurement resource related information.

15. The method according to claim 1, wherein the reporting quantity comprises a first reporting quantity part and a second reporting quantity part; the first reporting quantity part corresponds to a first quantization interval, the second reporting quantity part corresponds to a second quantization interval; a quantization range of the reporting quantity corresponding to the first quantization interval is different from a quantization range of the reporting quantity corresponding to the second quantization interval.

16. A measurement reporting method, comprising:
receiving, by a network device, a reporting quantity transmitted by a user equipment (UE), or receiving a reporting quantity and indication information of multiple pieces of measurement resource related information corresponding to the reporting quantity, transmitted by the UE;
wherein the reporting quantity comprises at least one of the following:
time domain related parameter;
frequency domain related parameter; or
phase related parameter.

17. The method according to claim 16, further comprising:
transmitting, by the network device, a configuration parameter corresponding to the measurement resource related information to the UE;
transmitting, by the network device, a measurement resource to the UE.

18. The method according to claim 17, wherein the measurement resource related information and the configuration parameter satisfy a first rule, wherein the first rule comprises at least one of the following:
one measurement resource related information corresponds to one configuration parameter;
one measurement resource related information group corresponds to one configuration parameter; or
a measurement resource related information group corresponding to a code division multiplexing (CDM) group corresponds to one configuration parameter.

19. The method according to claim 16, further comprising:
determining, by the network device, measurement resource related information corresponding to the reporting quantity.

20. The method according to claim 19, wherein the determining, by the network device, measurement resource related information corresponding to the reporting quantity, comprises at least one of the following:
determining, by the network device, the measurement resource related information corresponding to the reporting quantity according to an order of the reporting quantities and a configuration order or an indication order of the measurement resource related information;
determining, by the network device, the measurement resource related information corresponding to the reporting quantity according to an order of the reporting quantities and indexes or identifiers of multiple pieces of measurement resource related information;
determining, by the network device, the measurement resource related information corresponding to the reporting quantity according to according to a second rule; or
determining, by the network device, the measurement resource related information corresponding to the reporting quantity according to indication information of the measurement resource related information included in the measurement information.

21. The method according to claim 20, wherein the determining, by the network device, the measurement resource related information corresponding to the reporting quantity according to an order of the reporting quantities and indexes or identifiers of multiple pieces of measurement resource related information, comprises at least one of the following:
determining, by the network device, that measurement resource related information corresponding to an n-th reporting quantity is: n-th measurement resource related information and reference measurement resource information; wherein the reference measurement resource information is one of the measurement resource related information;
determining, by the network device, that measurement resource related information corresponding to an n-th reporting quantity is: (n+1)-th measurement resource related information and reference measurement resource information;
determining, by the network device, that measurement resource related information corresponding to an n-th reporting quantity is: n-th measurement resource related information and (n+1)-th measurement resource related information;
determining, by the network device, that the measurement resource related information corresponding to an n-th reporting quantity is: n-th measurement resource related information and (n-1)-th measurement resource related information; or
determining, by the network device, that the measurement resource related information corresponding to an n-th reporting quantity is: k-th measurement resource related information and reference measurement resource information;
wherein n, k are greater than or equal to 1, and n and k are different.

22. The method according to claim 20, wherein the determining, by the network device, the measurement resource related information corresponding to the reporting quantity according to an order of the reporting quantities and indexes or identifiers of multiple pieces of measurement resource related information, comprises at least one of the following:
determining, by the network device, that measurement resource related information corresponding to an m-th reporting quantity includes: measurement resource related information corresponding to a measurement resource information identifier m and reference measurement resource information;
determining, by the network device, that the measurement resource related information corresponding to an m-th reporting quantity is: measurement resource related information corresponding to a measurement resource information identifier (m+1) and reference measurement resource information;
determining, by the network device, that measurement resource related information corresponding to an m-th reporting quantity is: measurement resource related information corresponding to a measurement resource information identifier m and measurement resource related information corresponding to a measurement resource information identifier (m+1);
determining, by the network device, that measurement resource related information corresponding to an m-th reporting quantity is: measurement resource related information corresponding to a measurement resource information identifier m and measurement resource related information corresponding to a measurement resource information identifier (m-1);
determining, by the network device, that measurement resource related information corresponding to an m-th reporting quantity is: measurement resource related information corresponding to a measurement resource information identifier p and reference measurement resource information; wherein m and p are greater than or equal to 0, and m and p are different; or
determining, by the network device, indexes or identifiers of measurement resource related information according to an order of reporting quantities;
wherein m and p are greater than or equal to 0, and m is different from p.

23. The method according to claim 21 or 22, further comprising at least one of the following:
determining, by the network device, the reference measurement resource information according to a predefined rule;
determining, by the network device, that Y-th measurement resource related information in the measurement resource related information is the reference measurement resource information, wherein Y is greater than or equal to 1; or
determining, by the network device, the reference measurement resource information according to an indication of the UE.

24. The method according to claim 16, wherein the indication information of the measurement resource related information includes at least one of the following:
bit information corresponding to indexes or identifiers of measurement resource related information; or
indexes or identifiers of measurement resource related information.

25. The method according to claim 16, wherein the reporting quantity comprises: a first reporting quantity part and a second reporting quantity part; the first reporting quantity part corresponds to a first quantization interval, the second reporting quantity part corresponds to a second quantization interval; a quantization range of the reporting quantity corresponding to the first quantization interval is different from a quantization range of the reporting quantity corresponding to the second quantization interval.

26. A user equipment (UE), comprising: a memory, a transceiver, and a processor;
wherein the memory is used to store a computer program; the transceiver is used to receive and send data under the control of the processor; the processor is used to read the computer program in the memory and perform the following operations:
determining a reporting quantity according to multiple pieces of measurement resource related information;
reporting the reporting quantity to a network device, or reporting the reporting quantity and indication information of the multiple pieces of measurement resource related information corresponding to the reporting quantity to the network device;
wherein the reporting quantity comprises at least one of the following:
time domain related parameter;
frequency domain related parameter; or
phase related parameter.

27. The UE according to claim 26, wherein the processor is used to read the computer program in the memory and perform the following operations:
determining a configuration parameter corresponding to the measurement resource related information;
receiving the measurement resource related information according to the configuration parameter;
wherein the measurement resource related information includes at least one of the following: measurement resource, port of measurement resource, or measurement resource set.

28. The UE according to claim 27, wherein the processor is used to read the computer program in the memory and perform the following operations:
determining the configuration parameter corresponding to the measurement resource related information according to a first rule;
or,
determining the configuration parameter corresponding to measurement resource related information according to configuration information of the network device;
wherein the configuration parameter comprises transmission configuration indication (TCI) state and/or quasi co-location (QCL) parameter.

29. The UE according to claim 27, wherein the processor is used to read the computer program in the memory and perform at least one of the following operations:
determining a reference configuration parameter in the configuration parameter, and receiving a measurement resource by using the reference configuration parameter;
determining a first configuration parameter according to the configuration parameter and a reporting quantity configured by the network device, and receiving a measurement resource by using the first configuration parameter; or,
receiving a measurement resource based on a configuration parameter type included in the configuration parameter.

30. The UE according to claim 26, wherein the processor is used to read the computer program in the memory and perform at least one of the following operations:
determining the reporting quantity according to a configuration order or an indication order of multiple pieces of measurement resource related information; or
determining the reporting quantity according to indexes or identifiers of multiple pieces of measurement resource related information.

31. The UE according to claim 30, wherein the processor is used to read the computer program in the memory and perform at least one of the following operations:
determining an n-th reporting quantity according to n-th measurement resource related information and reference measurement resource information, wherein the reference measurement resource information is one of the measurement resource related information;
determining an n-th reporting quantity according to a (n+1)-th measurement resource related information and reference measurement resource information;
determining an n-th reporting quantity according to an n-th measurement resource related information and a (n+1)-th measurement resource related information
determining an n-th reporting quantity according to the n-th measurement resource related information and the (n-1)-th measurement resource related information; or
determining an n-th reporting quantity according to k-th measurement resource related information and reference measurement resource information;
wherein n and k are greater than or equal to 1, and n and k are different.

32. The UE according to claim 30, wherein the processor is used to read the computer program in the memory and perform at least one of the following operations:
determining an m-th reporting quantity according to measurement resource related information corresponding to a measurement resource information identifier m and reference measurement resource information;
determining an m-th reporting quantity according to measurement resource related information corresponding to a measurement resource information identifier (m+1) and reference measurement resource information;
determining an m-th reporting quantity according to measurement resource related information corresponding to a measurement resource information identifier m and measurement resource related information corresponding to a measurement resource information identifier (m+1);
determining an m-th reporting quantity according to measurement resource related information corresponding to a measurement resource information identifier m and measurement resource related information corresponding to a measurement resource information identifier (m-1);
determining an m-th reporting quantity according to measurement resource related information corresponding to a measurement resource information identifier p and reference measurement resource information; or
determining the reporting quantity according to an order of indexes or identifiers of multiple pieces of measurement resource related information;
wherein m and p are greater than or equal to 0, and m is different from p.

33. The UE according to claim 26, wherein the indication information of the measurement resource related information includes at least one of the following:
bit information corresponding to indexes or identifiers of measurement resource related information; or
indexes or identifiers of measurement resource related information.

34. A network device, comprising: a memory, a transceiver, and a processor;
wherein the memory is used to store a computer program; the transceiver is used to receive and send data under the control of the processor; the processor is used to read the computer program in the memory and perform the following operations:
receiving a reporting quantity transmitted by a user equipment (UE), or receiving a reporting quantity and indication information of multiple pieces of measurement resource related information corresponding to the reporting quantity, transmitted by the UE;
wherein the reporting quantity comprises at least one of the following:
time domain related parameter;
frequency domain related parameter; or
phase related parameter.

35. The network device according to claim 34, wherein the processor is used to read the computer program in the memory and perform the following operations:
transmitting a configuration parameter corresponding to the measurement resource related information to the UE;
transmitting a measurement resource to the UE.

36. The network device according to claim 34, wherein the processor is used to read the computer program in the memory and perform the following operations:
determining measurement resource related information corresponding to the reporting quantity.

37. The network device according to claim 36, wherein the processor is used to read the computer program in the memory and perform at least one of the following operations:
determining the measurement resource related information corresponding to the reporting quantity according to an order of the reporting quantities and a configuration order or an indication order of the measurement resource related information;
determining the measurement resource related information corresponding to the reporting quantity according to an order of the reporting quantities and indexes or identifiers of multiple pieces of measurement resource related information;
determining the measurement resource related information corresponding to the reporting quantity according to according to a second rule; or
determining the measurement resource related information corresponding to the reporting quantity according to indication information of the measurement resource related information included in the measurement information.

38. The network device according to claim 37, wherein the processor is used to read the computer program in the memory and perform at least one of the following operations:
determining that measurement resource related information corresponding to an n-th reporting quantity is: n-th measurement resource related information and reference measurement resource information; wherein the reference measurement resource information is one of the measurement resource related information;
determining that measurement resource related information corresponding to an n-th reporting quantity is: (n+1)-th measurement resource related information and reference measurement resource information;
determining that measurement resource related information corresponding to an n-th reporting quantity is: n-th measurement resource related information and (n+1)-th measurement resource related information;
determining that the measurement resource related information corresponding to an n-th reporting quantity is: n-th measurement resource related information and (n-1)-th measurement resource related information; or
determining that the measurement resource related information corresponding to an n-th reporting quantity is: k-th measurement resource related information and reference measurement resource information;
wherein n, k are greater than or equal to 1, and n and k are different.

39. The network device according to claim 37, wherein the processor is used to read the computer program in the memory and perform at least one of the following operations:
determining that measurement resource related information corresponding to an m-th reporting quantity includes: measurement resource related information corresponding to a measurement resource information identifier m and reference measurement resource information;
determining that the measurement resource related information corresponding to an m-th reporting quantity is: measurement resource related information corresponding to a measurement resource information identifier (m+1) and reference measurement resource information;
determining that measurement resource related information corresponding to an m-th reporting quantity is: measurement resource related information corresponding to a measurement resource information identifier m and measurement resource related information corresponding to a measurement resource information identifier (m+1);
determining that measurement resource related information corresponding to an m-th reporting quantity is: measurement resource related information corresponding to a measurement resource information identifier m and measurement resource related information corresponding to a measurement resource information identifier (m-1);
determining that measurement resource related information corresponding to an m-th reporting quantity is: measurement resource related information corresponding to a measurement resource information identifier p and reference measurement resource information; wherein m and p are greater than or equal to 0, and m and p are different; or
determining indexes or identifiers of measurement resource related information according to an order of reporting quantities;
wherein m and p are greater than or equal to 0, and m is different from p.

40. The network device according to claim 34, wherein the indication information of the measurement resource related information includes at least one of the following:
bit information corresponding to indexes or identifiers of measurement resource related information; or
indexes or identifiers of measurement resource related information.

41. A measurement reporting apparatus, comprising:
a first determining unit used to determine a reporting quantity according to multiple pieces of measurement resource related information;
a first determining unit used to report the reporting quantity to a network device, or report the reporting quantity and indication information of the multiple pieces of measurement resource related information corresponding to the reporting quantity to the network device;
wherein the reporting quantity comprises at least one of the following:
time domain related parameter;
frequency domain related parameter; or
phase related parameter.

42. The apparatus according to claim 41, further comprising:
a second determining unit used to determine a configuration parameter corresponding to the measurement resource related information;
a second receiving unit used to receive the measurement resource related information according to the configuration parameter;
wherein the measurement resource related information includes at least one of the following: measurement resource, port of measurement resource, or measurement resource set.

43. The apparatus according to claim 42, wherein the second determining unit is specifically used to:
determine the configuration parameter corresponding to the measurement resource related information according to a first rule;
or,
determine the configuration parameter corresponding to measurement resource related information according to configuration information of the network device;
wherein the configuration parameter comprises transmission configuration indication (TCI) state and/or quasi co-location (QCL) parameter.

44. The apparatus according to claim 42, wherein the second receiving unit is specifically used to perform at least one of the following:
determining a reference configuration parameter in the configuration parameter, and receiving a measurement resource by using the reference configuration parameter;
determining a first configuration parameter according to the configuration parameter and a reporting quantity configured by the network device, and receiving a measurement resource by using the first configuration parameter; or,
receiving a measurement resource based on a configuration parameter type included in the configuration parameter.

45. The apparatus according to claim 41, wherein the first determining unit is specifically used to perform at least one of the following:
determining the reporting quantity according to a configuration order or an indication order of multiple pieces of measurement resource related information; or
determining the reporting quantity according to indexes or identifiers of multiple pieces of measurement resource related information.

46. The apparatus according to claim 45, wherein the first determining unit is specifically used to perform at least one of the following:
determining an n-th reporting quantity according to n-th measurement resource related information and reference measurement resource information, wherein the reference measurement resource information is one of the measurement resource related information;
determining an n-th reporting quantity according to a (n+1)-th measurement resource related information and reference measurement resource information;
determining an n-th reporting quantity according to an n-th measurement resource related information and a (n+1)-th measurement resource related information
determining an n-th reporting quantity according to the n-th measurement resource related information and the (n-1)-th measurement resource related information; or
determining an n-th reporting quantity according to k-th measurement resource related information and reference measurement resource information;
wherein n and k are greater than or equal to 1, and n and k are different.

47. The apparatus according to claim 45, wherein the first determining unit is specifically used to perform at least one of the following:
determining an m-th reporting quantity according to measurement resource related information corresponding to a measurement resource information identifier m and reference measurement resource information;
determining an m-th reporting quantity according to measurement resource related information corresponding to a measurement resource information identifier (m+1) and reference measurement resource information;
determining an m-th reporting quantity according to measurement resource related information corresponding to a measurement resource information identifier m and measurement resource related information corresponding to a measurement resource information identifier (m+1);
determining an m-th reporting quantity according to measurement resource related information corresponding to a measurement resource information identifier m and measurement resource related information corresponding to a measurement resource information identifier (m-1);
determining an m-th reporting quantity according to measurement resource related information corresponding to a measurement resource information identifier p and reference measurement resource information; or
determining the reporting quantity according to an order of indexes or identifiers of multiple pieces of measurement resource related information;
wherein m and p are greater than or equal to 0, and m is different from p.

48. The apparatus according to claim 41, wherein the indication information of the measurement resource related information includes at least one of the following:
bit information corresponding to indexes or identifiers of measurement resource related information; or
indexes or identifiers of measurement resource related information.

49. A measurement reporting apparatus, comprising:
a first receiving unit used to receive a reporting quantity transmitted by a user equipment (UE), or receiving a reporting quantity and indication information of multiple pieces of measurement resource related information corresponding to the reporting quantity, transmitted by the UE;
wherein the reporting quantity comprises at least one of the following:
time domain related parameter;
frequency domain related parameter; or
phase related parameter.

50. The apparatus according to claim 49, further comprising:
a second transmission unit used to transmit a configuration parameter corresponding to the measurement resource related information to the UE;
a third transmission unit used to transmit a measurement resource to the UE.

51. The apparatus according to claim 49, further comprising:
a fourth determining unit used to determine measurement resource related information corresponding to the reporting quantity.

52. The apparatus according to claim 51, wherein the fourth determining unit is specifically used to perform at least one of the following:
determining the measurement resource related information corresponding to the reporting quantity according to an order of the reporting quantities and a configuration order or an indication order of the measurement resource related information;
determining the measurement resource related information corresponding to the reporting quantity according to an order of the reporting quantities and indexes or identifiers of multiple pieces of measurement resource related information;
determining the measurement resource related information corresponding to the reporting quantity according to according to a second rule; or
determining the measurement resource related information corresponding to the reporting quantity according to indication information of the measurement resource related information included in the measurement information.

53. The apparatus according to claim 52, wherein the fourth determining unit is specifically used to perform at least one of the following:
determining that measurement resource related information corresponding to an n-th reporting quantity is: n-th measurement resource related information and reference measurement resource information; wherein the reference measurement resource information is one of the measurement resource related information;
determining that measurement resource related information corresponding to an n-th reporting quantity is: (n+1)-th measurement resource related information and reference measurement resource information;
determining that measurement resource related information corresponding to an n-th reporting quantity is: n-th measurement resource related information and (n+1)-th measurement resource related information;
determining that the measurement resource related information corresponding to an n-th reporting quantity is: n-th measurement resource related information and (n-1)-th measurement resource related information; or
determining that the measurement resource related information corresponding to an n-th reporting quantity is: k-th measurement resource related information and reference measurement resource information;
wherein n, k are greater than or equal to 1, and n and k are different.

54. The apparatus according to claim 52, wherein the fourth determining unit is specifically used to perform at least one of the following:
determining that measurement resource related information corresponding to an m-th reporting quantity includes: measurement resource related information corresponding to a measurement resource information identifier m and reference measurement resource information;
determining that the measurement resource related information corresponding to an m-th reporting quantity is: measurement resource related information corresponding to a measurement resource information identifier (m+1) and reference measurement resource information;
determining that measurement resource related information corresponding to an m-th reporting quantity is: measurement resource related information corresponding to a measurement resource information identifier m and measurement resource related information corresponding to a measurement resource information identifier (m+1);
determining that measurement resource related information corresponding to an m-th reporting quantity is: measurement resource related information corresponding to a measurement resource information identifier m and measurement resource related information corresponding to a measurement resource information identifier (m-1);
determining that measurement resource related information corresponding to an m-th reporting quantity is: measurement resource related information corresponding to a measurement resource information identifier p and reference measurement resource information; wherein m and p are greater than or equal to 0, and m and p are different; or
determining indexes or identifiers of measurement resource related information according to an order of reporting quantities;
wherein m and p are greater than or equal to 0, and m is different from p.

55. The apparatus according to claim 49, wherein the indication information of the measurement resource related information includes at least one of the following:
bit information corresponding to indexes or identifiers of measurement resource related information; or
indexes or identifiers of measurement resource related information.

56. A processor-readable storage medium, comprising: a computer program stored thereon; wherein the computer program is used to cause a processor to execute steps of the measurement reporting method according to any one of claims 1 to 15, or to execute steps of the measurement reporting method according to any one of claims 16 to 25.
